(19) **Europäisches Patentamt / European Patent Office / Office européen des brevets**

(11) **EP 2 355 332 A2**

(12) # EUROPEAN PATENT APPLICATION

(43) Date of publication:
**10.08.2011 Bulletin 2011/32**

(51) Int Cl.:
**H02P 5/68** (2006.01)

(21) Application number: **11000719.2**

(22) Date of filing: **28.01.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.01.2010 JP 2010016889**

(71) Applicants:
• **Aida Engineering, Ltd.**
  **Sagamihara City**
  **Kanagawa 252-5181 (JP)**
• **Hitachi Industrial Equipment Systems Co., Ltd.**
  **Tokyo 101-0022 (JP)**

(72) Inventors:
• **Yahara, Masataka**
  **Narashino-shi**
  **Chiba-ken**
  **275-8611 (JP)**

• **Kobayashi, Tetsuro**
  **Tokyo**
  **101-0022 (JP)**
• **Nagase, Hiroshi**
  **Sagamihara City**
  **Kanagawa Prefecture 252-5181 (JP)**
• **Morinaga, Shigeki**
  **Sagamihara City**
  **Kanagawa Prefecture 252-5181 (JP)**
• **Tanaka, Yasuhiko**
  **Sagamihara City**
  **Kanagawa Prefecture 252-5181 (JP)**

(74) Representative: **Beetz & Partner**
**Patentanwälte**
**Steinsdorfstrasse 10**
**80538 München (DE)**

(54) **Motor control system and method**

(57) A highly efficient and reliable motor control system and motor control method are provided. The motor control system includes a motor (1) having a plurality of sets of armature windings (1-A - 1-D), a plurality of inverters (11A - 11D) which drive the plurality of sets of armature windings, and a plurality of control devices 201a - 201d) which control the inverters individually. While a motor torque command ($\tau$c) is in a smallest-magnitude range, a first inverter is operated to energize a first set of armature windings; when the motor torque command increases into a next larger-magnitude range, the first and a second inverter are operated to energize the first and a second set of armature windings; and so on until all inverters are operated to energize all sets of armature windings. Thus, the number of inverters driven and/or the number of sets of armature windings energized are sequentially changed according to the torque command.

FIG. 1

EP 2 355 332 A2

**Description**

FIELD OF THE INVENTION

The present invention relates to a motor control system and method for a large capacity motor and, more particularly, to a motor control system and method in which plural sets of armature windings of a motor are driven by corresponding inverters.

BACKGROUND OF THE INVENTION

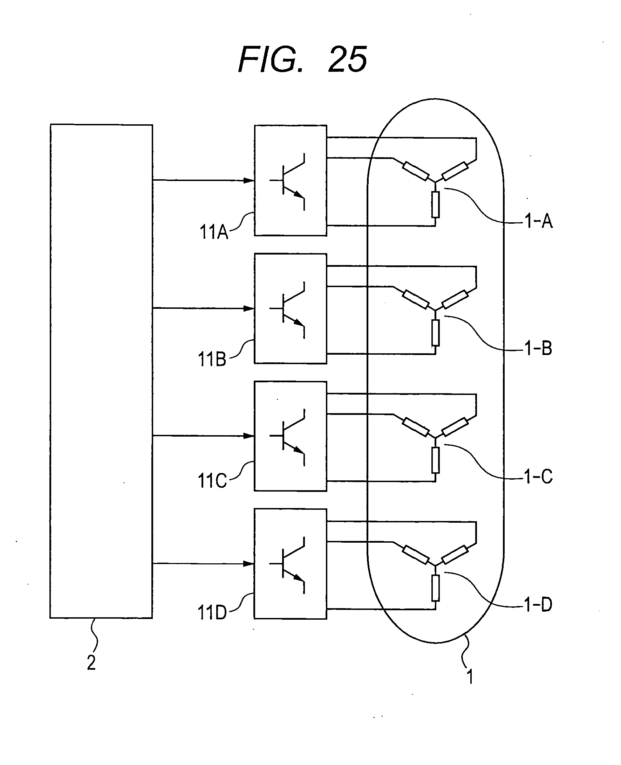

Large-capacity servo motors have been in demand for driving press machines and machine tools. Large-capacity servo motors are each provided with plural sets of armature windings to be driven by plural inverters. FIG. 25 schematically shows an existing type of a servo motor system in which an AC motor 1 is provided with four sets of armature windings 1-A, 1-B, 1-C, and 1-D. The four sets of armature windings are driven by four inverters 11A, 11B, 11C, and 11D which are controlled by a control device 2. Since the four inverters are used to flow electric currents through the four sets of armature windings, large-capacity driving not controllable by a single inverter can be economically realized using generally available inverters. The above technology is disclosed, for example, in Japanese Patent Laid-Open No. 2008-43046 and Japanese Patent Laid-Open No. H08(1996)-289587.

SUMMARY OF THE INVENTION

In such existing technology, however, plural inverters are controlled so as to obtain a characteristic equivalent to that of driving by a single inverter. For that purpose, control is mainly aimed at removing current unbalance between windings by making an even current flow through each winding (see Japanese Patent Laid-Open No. H08 (1996)-289587). As a result, plural inverters are evenly driven regardless of the magnitude of the torque to be generated using each inverter and an even drive current is made to flow through each winding.
The operation of a press machine or a machine tool is broadly divided into stand-by operation in which, for example, a workpiece is moved into position in a machine and moved out from the machine and functional operation in which the workpiece is pressed or machined. The functional operation requires a large torque for pressing or machining the workpiece, whereas a small torque is usually enough for moving the workpiece at a constant speed in the stand-by operation. When a transitional stage is involved when shifting from the stand-by operation to the functional operation requiring the operation speed to be changed, a somewhat larger torque than required in the stand-by operation may be required. There are many cases in which the stand-by operation accounts for a large portion of the entire operation of a press machine or machine tool. Namely, while a press machine or machine tool is operated, its torque requirement varies. In the existing technology described above, all the inverters are uniformly driven and an even current corresponding to torque requirement flows through each winding. In this way, the inverters are driven in the same manner even during stand-by operation requiring only a small torque. Improvement for energy-saving is therefore desirable for the existing technology.
When plural sets of armature windings are driven by plural inverters, flexible control is possible. For example, the currents made to flow through the plural sets of armature windings can be individually controlled as desired and the plural inverters can be individually activated and deactivated. Using plural inverters, therefore, makes it possible to drive plural sets of armature windings highly efficiently and reliably. The technologies disclosed in Japanese Patent Laid-Open No. 2008-43046 and Japanese Patent Laid-Open No. H08(1996)-289587, however, reflect no consideration for energy-saving, highly reliable driving operation with reduced loss.
The present invention has been made in view of such circumstances and an object of the invention is to provide a motor control system and method suitable for use in realizing highly efficient and reliable large-capacity motor driving.
To achieve the above object, the present invention provides a motor control system including a motor having a plurality of sets of armature windings, a plurality of inverters which drive the plurality of sets of armature windings individually, and a plurality of control devices which receive a motor drive command and control the inverters individually. The motor control system comprises: an operation control section which receives a motor drive command for torque control or position control and outputs a stage signal specifying one out of a plurality of operation stages determined according to the magnitude of the motor drive command; and a gain setting section which receives a stage signal from the operation control section, sets an amount of gain corresponding to an amount of torque to be generated, according to the motor drive command, using each inverter, and outputs the gain to the control device corresponding to the each inverter. In the motor control system, out of the plurality of inverters, a required number of inverters determined according to the magnitude of the motor drive command are controlledly driven with the control devices driving or deactivating the corresponding inverters according to the gains set by the gain setting section.
Thus, during stand-by operation of a press machine or machine tool, for example, only a required minimum number of inverters are required to operate. This can realize highly efficient, energy-saving driving operation with reduced loss.

Also, in the above motor control system, the operation control section changes the determined operation stage at a predetermined magnitude of the motor drive command, the magnitude predetermined so as to reduce motor loss. This enables driving operation with further improved efficiency and further reduced loss.

Furthermore, in the motor control system, the gain setting section outputs gains to the control devices corresponding to the inverters so as to change the inverters to be driven according to the operation stage. Thus, the inverters to be driven can be switched to make loss generation uniform between inverters or between armature windings. This allows the inverters and armature windings to operate in a balanced manner for reliable driving operation.

Still furthermore, in the motor control system, a limiter is provided between the gain setting section and each of the control devices, the limiter limiting the gain for the corresponding set of armature windings not to allow the armature windings to generate a torque exceeding a maximum allowable value. This protects the armature windings and improves operational reliability.

Still furthermore, in the motor control system, the gain setting section outputs gains to the control devices corresponding to the inverters that drive armature windings mutually symmetrically positioned along a circumferential direction of the motor in such a manner that electric current is applied to the armature windings at a time. Hence, even when the number of sets of armature windings being driven is changed, the motor can be kept being driven in a balanced manner.

Still furthermore, in the motor control system, a switch is provided between each of the inverters and the corresponding set of armature windings, and each switch connected to each inverter to be driven according to the stage signal from the operation control section is closed, whereas each switch connected to each inverter not to be driven according to the stage signal is opened. In cases where the inverters are controlled by PWM control sections, the PWM control sections to be operating close the corresponding switches and the PWM control sections not to be operating open the corresponding switches. Therefore, no regenerative current from the armature windings can flow into the inverters. This makes loss reduction possible.

Still furthermore, in the motor control system, in changing an inverter to be driven, the gain setting section outputs a gradually varying gain to the control device corresponding to the inverter. Therefore, the number of sets of armature windings to be driven can be changed involving no motor torque variation.

Also, according to the present invention, the gain setting section sets gains such that the ratio between the torque command magnitude and the total torque generated by the motor is approximately constant over the entire range of torque command magnitude. Therefore, the amount of torque generated by the motor can be linearly represented relative to the magnitude of the torque command.

Furthermore, in cases where PWM control sections are used to control the inverters and the number of inverters to be driven is changed according to the torque command, the PWM control sections can be activated or deactivated individually. The inverters can therefore be made to operate or not to operate securely and easily.

Still furthermore, the ratings of inverters to be driven for long periods of time can be increased. It is therefore possible to securely cool system portions where loss generation resulting from long periods of operation is large. This enables reliable driving operation.

Still furthermore, when the number of inverters to be driven is changed according to the torque command, it is possible to change the connections between the inverter outputs and armature windings so as to change the number of inverters to be driven according to the torque command while keeping the armature windings energized. This makes it possible to drive a motor, in which the armature windings generate large copper loss, efficiently while keeping the total loss small.

Still furthermore, when the number of inverters to be driven is changed according to the torque command, any inverter which has gone out of order can be replaced by another inverter. Therefore, even if an inverter goes out of order, driving operation can be securely continued with high efficiency and reliability.

Still furthermore, the present invention can be applied also in cases where plural motors are used to drive a heavy load. Even in such cases, the control operations as described above can be performed using the plural motors in combination. This enables large-capacity driving operation with high efficiency and reliability.

As described above, the present invention can realize highly reliable, low-loss driving of a large-capacity motor in an energy saving manner.

BRIEF DESCRIPTION OF THE DRAWINGS

FIG. 1 is a control block diagram of a first embodiment of the present invention.
FIG. 2 is a flowchart showing operations of control elements of the first embodiment of the invention.

FIG. 3 is a diagram illustrating operations of the first embodiment of the invention.

FIG. 4 is a table of control operations of the first embodiment of the invention.

FIG. 5 is a control block diagram of second to sixth, seventh, ninth, twelfth, and thirteenth embodiments of the invention.

FIG. 6 is a diagram illustrating operations of the second embodiment of the invention.

FIG. 7 is a table of control operations of the second embodiment of the invention.

FIG. 8 is a characteristic chart of the second embodiment of the invention.

FIG. 9 is a diagram illustrating operations of the third embodiment of the invention.

FIG. 10 is a table of control operations of the third embodiment of the invention.

FIG. 11 is a table of control operations of the fourth embodiment of the invention.

FIG. 12 is a table of control operations of the fifth embodiment of the invention.

FIG. 13 is a flowchart showing operations of control elements of a sixth embodiment of the invention.

FIG. 14 is a control block diagram of an eighth embodiment of the invention.

FIG. 15 is a table of control operations of the eighth embodiment of the invention.

FIG. 16 is a control block diagram of the ninth embodiment of the invention.

FIG. 17 is a diagram illustrating operations of the ninth embodiment of the invention.

FIG. 18 is a table of control operations of the ninth embodiment of the invention.

FIG. 19 is a table of control operations of a tenth embodiment of the invention.

FIG. 20 is a control block diagram of an eleventh embodiment of the invention.

FIG. 21 is a diagram illustrating operations of the twelfth embodiment of the invention.

FIG. 22 is a table of control operations of the thirteenth embodiment of the invention.

FIG. 23 is a control block diagram of a fourteenth embodiment of the invention.

FIG. 24 is a table of control operations of a fourteenth embodiment of the invention.

FIG. 25 is a device configuration diagram of a past example.

DETAILED DESCRIPTION OF THE PREFERRED EMBODIMENTS

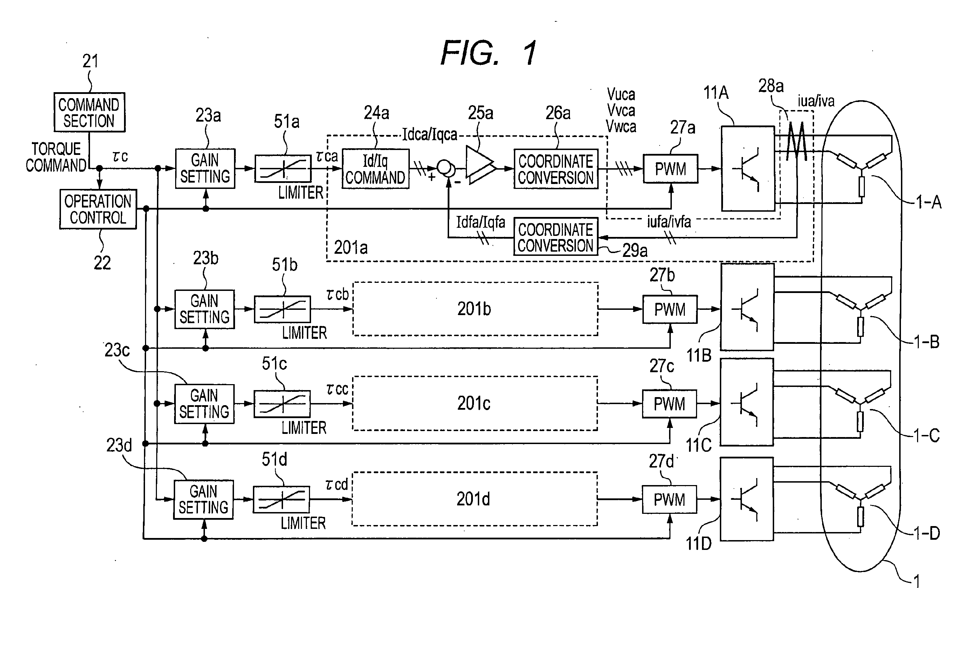

Embodiments of the present invention will be described below with reference to FIGS. 1 to 25.

First Embodiment

FIG. 1 is a control block diagram of a first embodiment of the present invention. In FIG. 1, reference numeral 1 denotes an AC motor having a stator provided with four sets of armature windings 1-A, 1-B, 1-C, and 1-D evenly spaced around its circumference. The AC motor 1 is a permanent magnet synchronous motor having a rotor, not shown, equipped with a permanent magnet. The four sets of armature windings are driven by corresponding inverters 11A, 11B, 11C, and 11D (also referred to collectively as the "inverters 11"), respectively. The total torque generated by the AC motor 1 is controlled to be proportional to the magnitude of a motor torque command (motor drive command) τc received from a command section 21 by having plural control devices control the inverters individually. The torque command τc issued from the command section 21 is generated by calculations performed, for example, by a well-known rotational position command section, position control section, and speed control section which are not shown. The configurations and operations of the plural control devices shown in FIG. 1 will be described below.
The torque command τc is inputted to gain setting sections 23a, 23b, 23c, and 23d (also referred to collectively as the "gain setting sections 23) . The gain setting sections set gains for controlling the output currents of the inverters 11A, 11B, 11C, and 11D, respectively. The gains correspond to the proportions of motor torques to be generated by the respective sets of armature windings according to the torque command τc. Namely, when the motor 1 is to generate a 100% total torque corresponding to a torque command τc with a magnitude of 100%, the values of the gains correspond to the proportions of torques to be generated by the four sets of armature windings, respectively, to achieve the 100% total torque of the motor. The gain setting sections 23 each determine a gain for each of operation stages I to IV, one of which is determined as a current operation stage by an operation control section 22. How the gains are determined will be described later.
The gain outputted from the gain setting section 23a serves as a signal to specify the amount of torque to be generated by the armature windings 1-A and is inputted to a limiter section 51a. The limiter section 51a limits the magnitude of the torque command so as not to cause the maximum torque that may be generated by the armature windings 1-A to be exceeded. Namely, when the magnitude of the torque command outputted from the gain setting section 23a for the armature windings 1-A is larger than its +100% value or smaller than its -100% value, the limiter section 51a outputs the torque command as a +100% or -100% torque command. When the magnitude of the torque command outputted from the gain setting section 23a for the armature windings 1-A is in the range of +100% to -100%, the limiter section 51a outputs the torque command as it is. The output of the limiter section 51a serves as an actual torque command τca specifying the portion of torque generation assigned to the armature windings 1-A. The actual torque command τca outputted from the limiter section 51a is inputted to a d/q axis current command section 24a. As a result, the d/q axis current command section 24a outputs signals specifying, based on the torque command τca, the d axis current and q axis current for the armature windings 1-A of the AC motor 1.

Through not being described in detail in this specification, there are various methods by which the d/q axis current command section 24a can be operated. It can be operated, for example, by a method in which the d axis current command is set to 0 and the q axis current command is controlled to be proportional to the actual torque command τca. In another method, d axis and q axis current commands are controlled using the actual torque command τca and the and the current motor speed as parameters so as to achieve high-efficiency motor operation. In the following, the operation of the d/q axis current command section 24a will be described based on the assumption that the method in which the d axis current command is set to 0 and the q axis current command is controlled to be proportional to the actual torque command τca is used. Other control methods for the d axis and q axis current commands can also be applied to the following embodiments of the present invention.

The d axis and q axis current commands Idca and Iqca outputted from the d/q axis current command section 24a are inputted to the d/q axis current control section 25a. Phase u and phase v alternating currents iua and iva outputted from the inverter 11A are detected as feedback signals iufa and ivfa at a current detector 28a. The feedback signals thus detected are converted into d axis and q axis current detection signals Idfa and Iqfa at a coordinate conversion section 29a. The d/q axis current control section 25a operating according to command signals from the d/q axis current command section 24a and feedback signals from the coordinate conversion section 29a outputs signals specifying d axis and q axis voltages. The signals thus outputted are converted, at a coordinate conversion section 26a, into voltage command signals Vuca, Vvca, and Vwca based on a coordinate system at rest to be then inputted to a PWM control section 27a. At the PWM control section 27a, a PWM control signal is generated to subject the inverter 11A to PWM control. Thus, the current applied to the armature windings 1A is controlled according to the torque command τca.

A control device (vector control section) 201a including, as shown in FIG. 1, the d/q axis current command section 24a, d/q axis current control section 25a, coordinate conversion section 26a, PWM control section 27a, current detector 28a, and coordinate conversion section 29a controls the inverter 11A to control the alternating current applied to the armature windings 1-A. Since this control method is widely known as vector control for an AC motor, it will not be further described in this specification.

For the convenience of the explanation hereinbelow, the vector control section 201a in Fig. 1 is described without including the PWM control section 27a.

The gain outputted from the gain setting section 23b serves as a signal to specify the amount of torque to be generated by the armature windings 1-B and is inputted to a limiter section 51b. The output of the limiter section 51b serves as an actual torque command τcb specifying the portion of torque generation assigned to the armature windings 1-B. The control configuration (vector control section) between the limiter section 51b and the PWM control section 27b is identical with the corresponding configuration (vector control section 201a) for controlling the armature windings 1-A and is, in FIG. 1, represented by a broken-line box 201b.

The gain outputted from the gain setting section 23c serves as a signal to specify the amount of torque to be generated by the armature windings 1-C and is inputted to a limiter section 51c. The output of the limiter section 51c serves as an actual torque command τcc specifying the portion of torque generation assigned to the armature windings 1-C. The control configuration (vector control section) between the limiter section 51c and the PWM control section 27c is identical with the corresponding configuration (vector control section 201a) for controlling the armature windings 1-A and is, in FIG. 1, represented by a broken-line box 201c.

The gain outputted from the gain setting section 23d serves as a signal to specify the amount of torque to be generated by the armature windings 1-D and is inputted to a limiter section 51d. The output of the limiter section 51d serves as an actual torque command τcd specifying the portion of torque generation assigned to the armature windings 1-D. The control configuration (vector control section) between the limiter section 51d and the PWM control section 27d is identical with the corresponding configuration (vector control section 201a) for controlling the armature windings 1-A and is, in FIG. 1, represented by a broken-line box 201d.

Even though, in the example shown in FIG. 1, current control for the AC motor 1 is performed by the inverters 11A to 11D, matrix converters, which are converters for obtaining variable voltages and frequencies directly from an AC power supply may be used instead of the inverters. The inverters referred to in describing the present invention include the matrix converters.

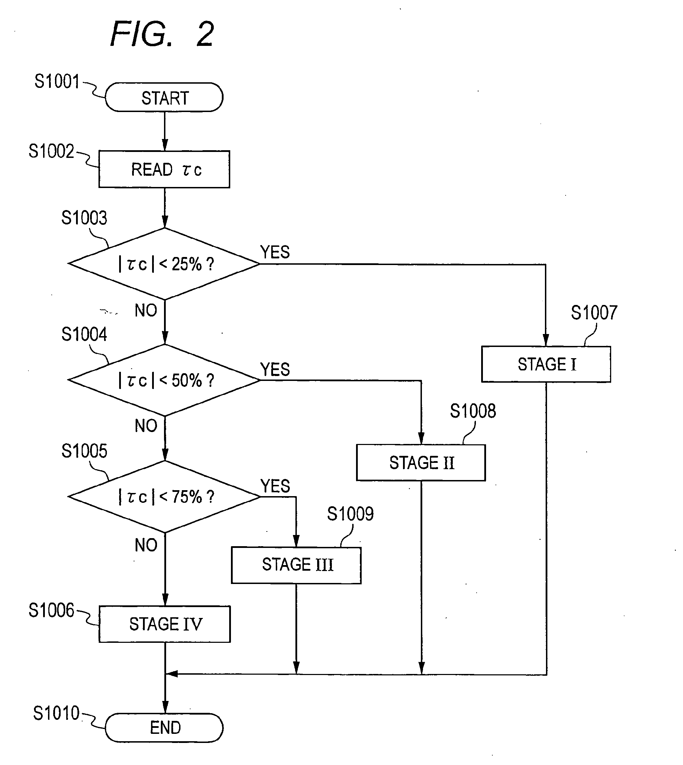

The operation control section 22 that is a characteristic of the present embodiment (invention) and that determines the state of energization of each set of armature windings used in the present embodiment will be described below. The operation control section 22 issues a command to determine the operating state of each of the four sets of armature windings 1-A, 1-B, 1-C, and 1-D according to the torque command τc received from the command section 21. FIG. 2 is a flowchart of operation of the operation control section 22. As shown, the operation control section 22 determines, based on the magnitude of the torque command τc, the current operation stage among operation stages I, II, III, and IV.

With reference to FIG. 2, the control operation of the operation control section 22 will be described in detail below. The following description is based on the assumption that the maximum value of the torque command τc is 100%. After the operation control section 22 starts (S1001), the torque command τc is read (S1002) and whether the absolute value of the torque command τc is smaller than 25% is determined (51003) . When the absolute value of the torque command τc is smaller than 25% (S1003 = YES), the current operation stage is determined to be I (S1007) and a stage I signal (operation command signal) is outputted.

When the absolute value of the torque command τc is not smaller than 25% (S1003 = NO), whether it is smaller than 50% is determined (S1004) . When the absolute value of the torque command τc is smaller than 50% (S1004 = YES), the current operation stage is determined to be II (S1008) and a stage II signal is outputted.

When the absolute value of the torque command τc is not smaller than 50% (S1004 = NO), whether it is smaller than 75% is determined (S1005). When the absolute value of the torque command τc is smaller than 75% (S1005 = YES), the current operation stage is determined to be III (S1009) and a stage III signal is outputted.

When the absolute value of the torque command τc is not smaller than 75% (S1005 = NO), the current operation stage is determined to be IV (S1006) and a stage IV signal is outputted.

As described above, whether the current operation stage is I, II, III, or IV is determined based on the torque command τc, the corresponding operation stage signal is outputted, and the operation is ended (S1010).

The operation of S1001 to S1010 is executed periodically and, when a change in the torque command τc occurs, the latest operation stage is detected in response to the change, and the stage signal is updated.

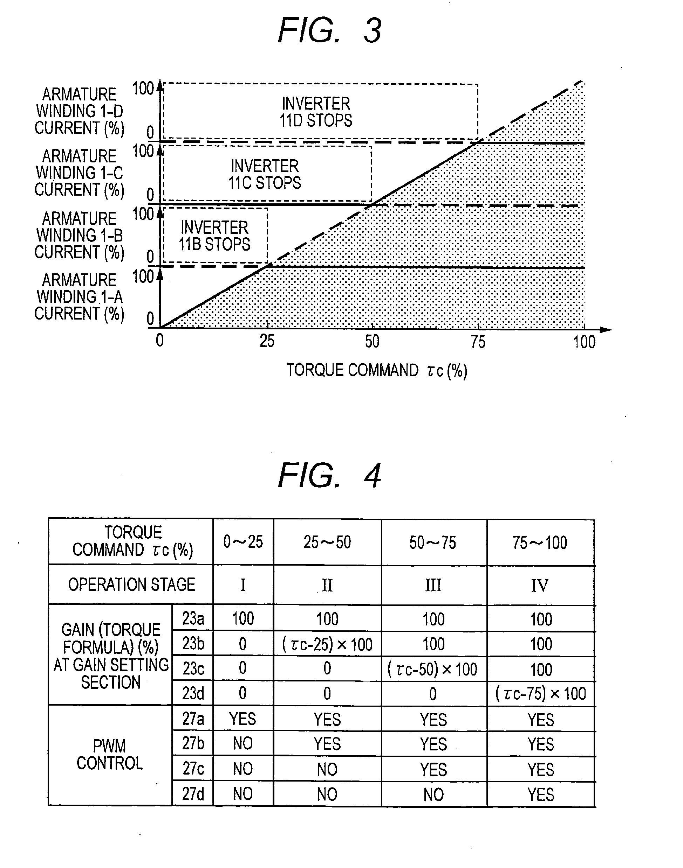

Each of the gain setting sections 23a, 23b, 23c, and 23d receives the stage signal specifying one of the operation stages I to IV determined as described above and determines a gain corresponding to the specified operation stage, thereby determining the operating state of the corresponding one of the PWM control sections 27a, 27b, 27c, and 27d (also referred to collectively as the "PWM control section 27) . FIG. 4 is a table showing how the gain setting sections 23 and the PWM control sections 27 are controlled according to the stage signal dependent on the magnitude of the torque command τc and received from the operation control section 22. To be concrete, FIG. 4 shows, with the maximum value of the torque command τc set to 100%, the value of gain (or a torque command calculation formula) set (or applied) at each of the gain setting sections 23a, 23b, 23c, and 23d according to whether the operation stage determined by the operation control section 22 is I, II, III, or IV and also shows whether PWM control is performed ("YES" in FIG. 4) or not ("NO" in FIG. 4) at each of the PWM control sections 27a, 27b, 27c, and 27d in each operation stage.

The operations performed with the settings as shown in FIG. 4 will be described later. Each PWM control section performs PWM control ("YES") only when the gain at the corresponding gain setting section is not 0. When the gain at a gain setting section is 0, the corresponding PWM control section does not perform PWM control ("NO"). The switching operation of each of the inverters 11 is performed according to the PWM control signal from the corresponding PWM control section. Namely, when a PWM control section performs PWM control, the corresponding inverter operates and, when a PWM control section does not perform PWM control, the corresponding inverter does not operate. Since whether an inverter operates or not is determined by whether the corresponding PWM control section operates or not, control as to whether to operate the inverters 11 can be performed securely and easily for higher operational reliability. Alternatively, whether or not to operate the inverters 11 may be determined by direct commands without using the PWM control sections 27.

As described above, the operation stage is switched from I to IV according to the magnitude of the torque command τc and, as the stage number becomes larger, the number of inverters operated and the number of armature windings to which a current is applied increase.

FIG. 3 shows how the inverters are operated and how a current is applied to each set of armature windings when controlled as described above. As shown, the amount of current applied to each set of armature windings is controlled to be proportional, in the range of 0 to 100%, to the magnitude of the torque command varying in the range of 0 to 100%.

Based on the examples shown in FIGS. 1, 3, and 4, the calculation performed at each gain setting section will be described in the following. Assume that, for the armature windings 1-A, τc represents a torque command (%), Ka represents the gain (%) at the gain setting section 23a, τca represents an actual torque command (%), Iqca represents a q axis current command (%), and Ia represents an armature current magnitude (%). The amount of current applied to each set of armature windings is proportional to the actual torque command for the armature windings. Hence, when the actual torque command τca remains in the range not to cause the limiter section 51a to operate, the following equations apply:

$$\tau ca = Ka \times \tau c/25 \qquad\qquad Eq.\ 1$$

$$Ia = Iqca = \tau ca \qquad Eq. 2$$

Similar relationships apply to the other armature windings, too.

As seen from FIG. 3, when the torque command $\tau c$ is in the range of 0 to 25%, the operation control section 22 determines that the operation stage is I. In stage I, as shown in FIG. 4, the gain is 100% at the gain setting section 23a and 0 at the other gain setting sections. In this state, the stage I signal is outputted to cause, out of the four PWM control sections, only the PWM control section 27a to operate. This causes only the inverter 11A out of the four inverters to operate while the other inverters do not operate. Hence, the current proportional, in the range of 0 to 100%, to the torque command $\tau c$ of 0 to 25% is made to flow through only the armature windings 1-A out of the four sets armature windings.

When the torque command $\tau c$ is in the range of 25 to 50%, the operation control section 22 determines that the operation stage is II and outputs a stage II signal. The stage II signal causes the gain at the gain setting section 23a to be set to 100%, the gain at the gain setting section 23b to be set to a calculation formula (somewhat different from the above equations), $\tau cb = (\tau c - 25) \times 100/25$ (%), and the gain at each of the gain setting sections 23c and 23d to be set to 0. In this state, the PWM control sections 27a and 27b and, hence, the inverters 11A and 11B operate while the other inverters do not operate. The current flowing through the armature windings 1-A is kept at 100% by operation of the limiter section 51a, whereas the current proportional, in the range of 0 to 100%, to the torque command $\tau c$ of 25 to 50% is made to flow through the armature windings 1-B. The armature windings 1-C and 1-D are left with no current flowing through them.

When the torque command $\tau c$ is in the range of 50 to 75%, the operation control section 22 determines that the operation stage is III and outputs a stage III signal. The stage III signal causes the gain at each of the gain setting sections 23a and 23b to be set to 100%, the gain at the gain setting section 23c to be set to a calculation formula, $\tau cc = (\tau c - 50) \times 100/25$ (%), and the gain at the gain setting section 23d to be set to 0. In this state, the PWM control sections 27a, 27b, and 27c and, hence, the inverters 11A, 11B, and 11C operate, whereas the remaining inverter 11D does not operate. The currents flowing through the armature windings 1-A and 1-B are kept at 100%, respectively, by operations of the limiter sections 51a and 51b, whereas the current proportional, in the range of 0 to 100%, to the torque command $\tau c$ of 50 to 75% is made to flow through the armature windings 1-C. The armature windings 1-D are left with no current flowing through them.

When the magnitude of the torque command $\tau c$ increases into the range of 75 to 100%, the operation control section 22 determines that the operation stage is IV and outputs a stage IV signal. The stage IV signal causes the gain at each of the gain setting sections 23a, 23b, and 23c to be set to 100% and the gain at the gain setting section 23d to be set to a calculation formula, $\tau cd = (\tau c - 75) \times 100/25$ (%) . In this state, all the PWM control sections 27a, 27b, 27c, and 27d and, hence, all the inverters 11A, 11B, 11C, and 11D operate. The currents flowing through the armature windings 1-A, 1-B, and 1-C are kept at 100%, respectively, by operations of the limiter sections 51a, 51b, and 51c, whereas the current proportional, in the range of 0 to 100%, to the torque command $\tau c$ of 75 to 100% is made to flow through the armature windings 1-D.

When the motor is controlled as described above, not all the inverters operate while the magnitude of the torque command $\tau c$ is small. Namely, the inverters that do not operate generate no operation loss and consume no power. Also, no current flows through the armature windings corresponding to the inverters that do not operate, and such armature windings cause no copper loss, consume no power, and generate no iron loss attributable to armature current. The torque command for a servo motor varies in various manners according to the load on and operating condition of the servo motor and, in the case of the present embodiment, the total operation loss and power consumption cab be reduced. According to the present embodiment, in cases where the magnitude of the torque command $\tau c$ linearly increases or decreases, the inverters once activated stay activated or once deactivated stay deactivated as shown in FIGS. 3 and 4. In this way, the number of times of turning on or off inverters can be reduced for less noise generation and smoother inverter operations.

When a motor is controlled according to the present embodiment, the total current flowing through the armature windings is, as shown in FIG. 3, always proportional to the magnitude of the torque command $\tau c$ regardless of the operation stage and the ratio between the magnitude of the torque command $\tau c$ and the total torque generated by the motor is constant. Moreover, the total torque is continuously controlled by tracking changes in the magnitude of the torque command $\tau c$. This realizes a servo system with a constant torque characteristic and high control performance.

According to the present embodiment, the armature current magnitude is proportional to the torque command magnitude. Namely, in the d/q axis current command section 24, Id is set to 0 and Iq is set to be proportional to the torque command magnitude. In cases where d axis current control is positively performed for high-efficiency control, namely, when optimum d axis and q axis currents for the torque command are made to flow by the d/q axis current command section 24, the armature winding currents are not as shown in FIG. 3, but the control operations performed are basically the same as the above-described operations. Also, to prevent the operation stage from being switched too frequently in the operation control section 22 due to variations in the magnitude of the torque command, the part for judging the torque command of the operation control section 22 may be provided with hysteresis or a filter.

As seen from the above description, controlling an AC motor according to the present embodiment making use of a motor construction including plural sets of armature windings makes it possible to realize a small-loss, high efficiency, energy-saving drive device.

Even though, in the present embodiment, the AC motor 1 is a permanent magnet synchronous motor, the embodiment can be also applied to other types of AC motors, for example, winding type synchronous motors, induction motors, and reluctance motors. Furthermore, the present embodiment can also be applied to AC motors having a different construction which include plural sets of armature windings, and the motor may be of a linear type instead of a rotary type.

Furthermore, even though, in the present embodiment, the operation control section 22 switches the operation stage according to the torque command τc, in the case of a system which is operated based on a position command and in which the position command and torque requirement correspond to each other, it is possible to perform operation control according to the position command. Take a servo press machine which performs pressing according to a slide motion command, for example. Different torque requirements at different slide positions can be determined by conducting a simulation or test operation, so that operation can be controlled according to the position command. Slide motions can be memorized for recalling when required and it is possible to also memorize the control operations corresponding to the slide motions.

Second Embodiment

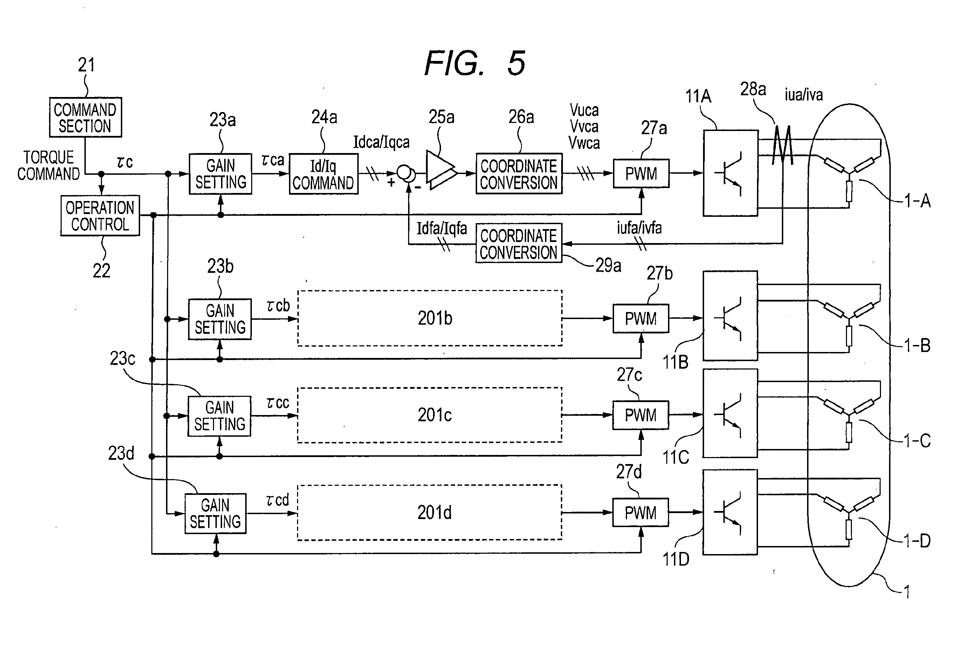

FIG. 5 is a control block diagram of a second embodiment of the present invention. Between FIG. 5 and FIG. 1, the same reference numerals denote the same items. FIG. 5 is the same as FIG. 1 except that the limiter sections 51a, 51b, 51c, and 51d (also referred to collectively as the "limiter sections 51") shown in FIG. 1 are not included in FIG. 5. In the second embodiment, too, the operation control section 22 determines the current operation stage out of operation stages I to IV, but the gain setting sections 23 operate differently from the first embodiment. The basic configuration and operation of the control system of the second embodiment are the same as those of the first embodiment. Characteristic points of the second embodiment will be described below.

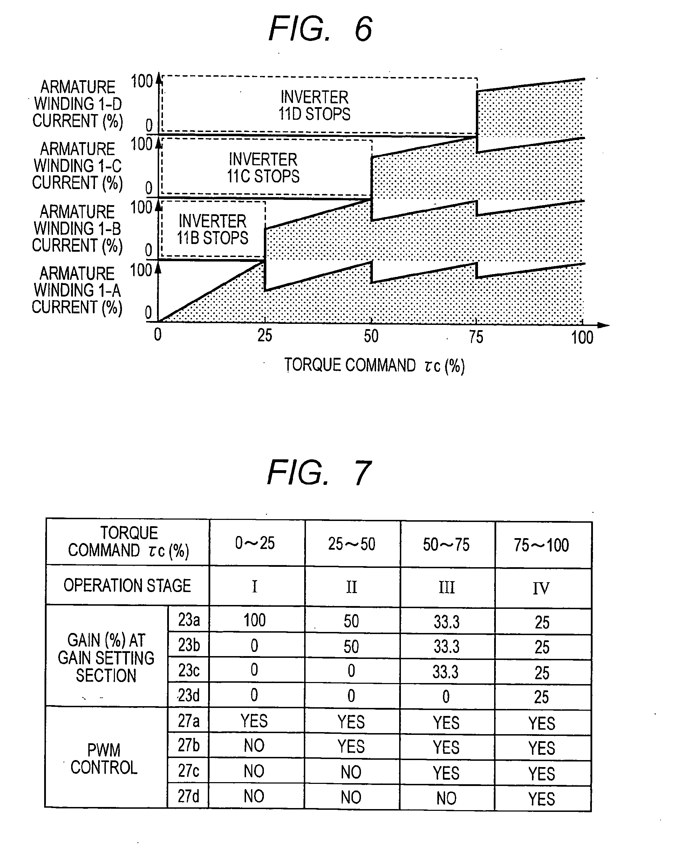

FIG. 7 shows, for each of the operation stages I to IV to be determined by the operation control section 22 according to the torque command τc, the gain at each of the gain setting sections 23a, 23b, 23c, and 23d and whether or not PWM control is performed at each of the PWM control sections 27a, 27b, 27c, and 27d. FIG. 6 shows the currents flowing through the armature windings according to the magnitude of the torque command. To be more concrete, FIG. 6 shows, with the maximum magnitude of the torque command τc from the command section 21 set to 100% and the maximum current flowing through each set of armature windings set to 100%, how much current flows through each set of armature windings in each operation stage. For the armature windings 1-A, the relationships between the gain Ka (%) at the gain setting section 23, the actual torque command τca (%), the q axis current command (%) Iqca, and the armature current magnitude Ia (%) are the same as represented by equations (1) and (2) given in describing the embodiment 1. The same relationships also apply to the other sets if armature windings.

As seen from FIG. 6, when the magnitude of the torque command τc is in the range of 0 to 25%, the operation control section 22 determines that the operation stage is I and outputs a stage I signal. According to the stage I signal received from the operation control section 22, the gain setting section 23a sets the gain to 100% (undertaking a 100% portion of the torque command τc), whereas the gain at each of the other gain setting sections 23b to 23d is set to 0% as shown in FIG. 7. Out of the four PWM control sections, only the PWM control section 27a operates, whereas a signal to stay out of operation is issued to each of the other PWM control sections. Hence, the stage I signal is issued to cause only the inverter 11A out of the four inverters to operate, whereas the other inverters are kept out of operation. A current proportional, in the range of 0 to 100%, to the torque command τc varying in the range of 0 to 25% is made to flow through the armature windings 1-A, whereas the other armature windings are left with no current flowing through them.

When the magnitude of the torque command τc is in the range of 25 to 50%, the operation control section 22 determines that the operation stage is II and outputs a stage II signal. In the operation stage II, as shown in FIG. 7, the gain at each of the gain setting sections 23a and 23b is set to 50%, whereas the gain at each of the other gain setting sections is set to 0, causing only the PWM control sections 27a and 27b out of the four PWM control sections to operate. Hence, out of the four inverters, only the inverters 11A and 11B are caused to operate, whereas the other inverters are caused to stay out of operation. As shown in FIG. 6, when the torque command τc exceeds 25%, the current flowing through the armature windings 1-A once drops to 50% and, subsequently, equal amounts of current proportional, in the range of 50 to 100%, to the torque command τc varying in the range of 25 to 50% flow through the armature windings 1-A and 1-B.

When the torque command τc further increases into the range of 50 to 75%, the operation control section 22 determines that the operation stage is III and outputs a stage III signal. In the operation stage III, the gain at each of the gain setting section 23a, 23b, and 23c is set to 33.3% and the gain at the gain setting section 23d is set to 0, causing the PWM control sections 27a, 27b, and 27c and the inverters 11A, 11B, and 11C to operate. The PWM control section 27d and the inverter 11D are kept out of operation. As shown in FIG. 6, when the torque command $\tau c$ exceeds 50%, the current flowing through each of the two sets of armature windings 1-A and 1-B once drops to 66.7% and, subsequently, equal amounts of current proportional, in the range of 66. 7 to 100%, to the torque command $\tau c$ varying in the range of 50 to 75% flow through the armature windings 1-A, 1-B, and 1-C.

When the torque command $\tau c$ further increases into the range of 75 to 100%, the operation control section 22 determines that the operation stage is IV and outputs a stage IV signal. In the operation stage IV, the gain at each of the gain setting sections 23a, 23b, 23c, and 23d is set to 25%, and all the PWM control sections 27a, 27b, 27c, and 27d operate. This causes the inverters 11A, 11B, 11C, and 11D to evenly operate as in past cases. When the torque command $\tau c$ exceeds 75%, the current flowing through each of the three sets of armature windings 1-A, 1-B, and 1-C once drops to 75% and, subsequently, equal amounts of current proportional, in the range of 75 to 100%, to the torque command $\tau c$ varying in the range of 75 to 100% flow through the armature windings 1-A, 1-B, 1-C, and 1-D.

The second embodiment described above differs from the first embodiment in that, when the operation stage is upwardly switched, the amount of current flowing through each active set of armature windings is once decreased. This can reduce the copper loss and increase operational efficiency. Also, when plural sets of armature windings are energized, equal amounts of current are caused to flow through the respective sets of armature windings, causing the respective sets of armature windings to generate identical magnetic fluxes. This makes a uniform rotational flux available along a circumferential direction.

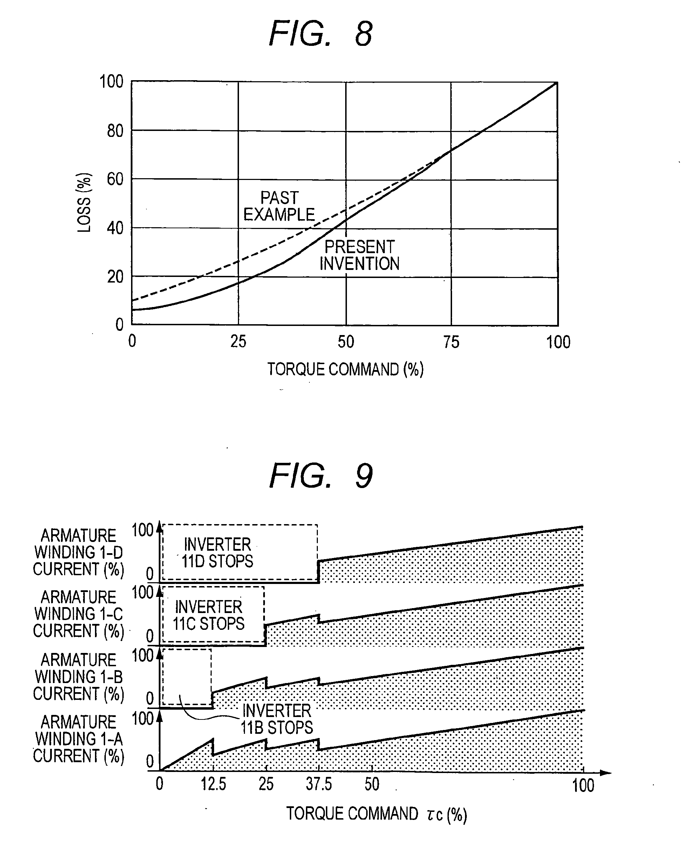

In FIG. 8, an example of total loss occurring in the main circuit configuration shown in FIG. 5, i.e. the total loss including the loss in the inverters 11A, 11B, 11C, and 11D, the iron loss of the AC motor 1, and the copper loss of the armature windings is compared with a total loss estimated to occur when all the inverters are driven causing equal amounts of current to flow through all sets of armature windings based on an existing technique. In the present embodiment (according to the present invention), not all the inverters are operated while the magnitude of the torque command $\tau c$ is small, that is, not all the inverters generate a switching loss. Also, while the magnitude of the torque command $\tau c$ is small, not all sets of the armature windings are energized, that is, armature windings with no current flowing through generate no copper loss and no iron loss. Hence, while the magnitude of the torque command $\tau c$ is small (0 to 75%), the loss generated and the power consumed are smaller in the present embodiment than in cases where an existing motor control system is used. When the magnitude of the torque command $\tau c$ is 75% or higher, the state of motor operation does not differ between the present embodiment and existing cases, so that the generation of loss does not differ between them, either. The torque command for a servo motor varies in various manners according to the condition of load on and operation of the servo motor. In the case of a servo motor driving a press machine or a machine tool, the time with the torque command ranging from 0 to 75% accounts for a large portion of the total operation time including stand-by periods. The present embodiment can, therefore, largely reduce the overall operational loss.

Also in the present embodiment, the total gain at the gain setting sections 23 is always 100%, so that the total torque generated by the armature windings is proportional to the torque command $\tau c$. Therefore, regardless of the amount of torque generated, the ratio between the torque command $\tau c$ and the total torque generated by the motor remains constant. It is therefore possible to stably operate the servo motor with a constant torque characteristic.

Even though the limiter sections 51 are not included in FIG. 5, the present embodiment can also be realized without removing the limiter sections 51 shown in FIG. 1.

In both the first and second embodiments, while the motor torque command $\tau c$ is in the smallest-magnitude range, only the inverter 11A is operated out of the four inverters and a current is made to flow through only the armature windings 1-A out of the four sets of armature windings; when the motor torque command $\tau c$ increases into the next larger-magnitude range, the inverters 11A and 11B are operated and a current is made to flow through each of the two sets of armature windings 1-A and 1-B; when the motor torque command $\tau c$ increases into the still next larger-magnitude range, the inverters 11A, 11B, and 11C are operated and a current is made to flow through each of the three sets of armature windings 1-A, 1-B, and 1-C; and when the motor torque command $\tau c$ increases into the largest-magnitude range, all the four inverters are operated and a current is made to flow through each of the four sets of armature windings. In this way, the number of inverters and the number of sets of armature windings operated are sequentially changed according to the torque command.

Third Embodiment

A third embodiment of the present invention is applicable when the AC motor 1 has a continuous rating and a short-time rating. The following description of the third embodiment is based on the assumption that the continuous rating is for the torque command $\tau c$ of up to 50% and that the short-time rating is for the torque command $\tau c$ of 50 to 100%. Namely, each set of armature windings can be kept energized until the torque command $\tau c$ exceeds 50% and, when the torque command $\tau c$ exceeds 50%, each set of armature windings can be energized only a short period of time.

The system configuration of the third embodiment is the same as that of the second embodiment shown in FIG. 5, but the torque command magnitudes that cause switching of the operation stage are different between the second and the third embodiment.

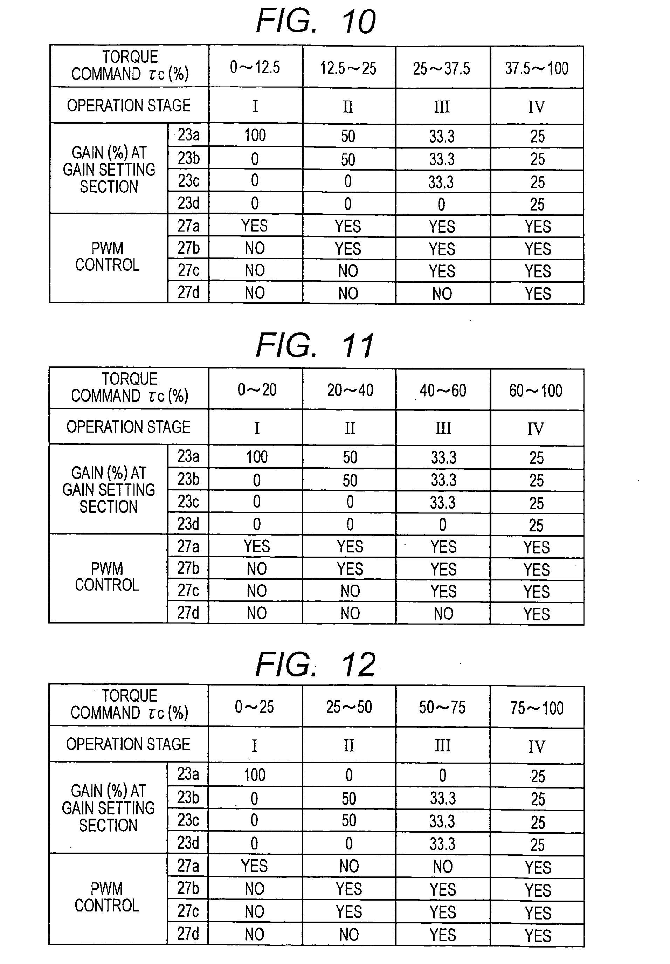

FIG. 10 shows example torque command ranges corresponding to the four operation stages set differently from the second embodiment based on the above point of view. As shown, the operation stage is switched when the magnitude of the torque command is 12.5%, 25%, and 37.5%. The gains at the gain setting sections and whether or not PWM control is performed at each PWM control section in each operation stage are the same as in the second embodiment. When the gains at the respective gain setting sections are controlled as shown in FIG. 10, the currents flowing through the respective sets of armature windings are controlled as shown in FIG. 9.

As seen from FIG. 9, when the magnitude of the torque command is in the range of 0 to 12.5%, the operation control section 22 determines that the operation stage is I. In this state, as shown in FIG. 10, the gain setting section 23a sets the gain to 100%, whereas the gain at each of the other gain setting sections is set to 0, and the operation control section 22 outputs a stage I signal causing only the PWM control section 27a out of the four PWM control sections to operate. In the operation stage I, out of the four inverters, only the inverter 11A operates whereas the other inverters do not and a current proportional, in the range of 0 to 50%, to the magnitude of the torque command τc is made to flow through only the armature windings 1-A.

Next, when the magnitude of the torque command τc increases into the range of 12.5 to 25%, the operation control section 22 determines that the operation stage is II. In this state, as shown in FIG. 10, the gain at each of the gain setting sections 23a and 23b is set to 50% whereas the gain at each of the other gain setting sections is set to 0, and the PWM control sections 27a and 27b are operated. In the operation stage II, the inverters 11A and 11B operate whereas the other inverters do not. When the operation stage switches from I to II, the current flowing through the armature windings 1-A once drops to 25% as shown in FIG. 9 to then gradually increase. Subsequently, equal amounts of current proportional, in the range of 25 to 50%, to the magnitude of the torque command τc flow through the two sets of armature windings 1-A and 1-B.

When the magnitude of the torque command τc further increases into the range of 25 to 37.5%, the operation control section 22 determines that the operation stage is III. In this state, the gain at each of the gain setting sections 23a, 23b, and 23c is set to 33.3% whereas the gain at the gain setting section 23d is set to 0, and the PWM control sections 27a, 27b, and 27c are operated. In the operation stage III, the inverters 11A, 11B, and 11C operate whereas the inverter 11D does not. When the operation stage switches from II to III, the current flowing through each of the two sets of armature windings 1-A and 1-B once drops to 33.3% as shown in FIG. 9 to then gradually increase. Subsequently, equal amounts of current proportional, in the range of 33.3 to 50%, to the magnitude of the torque command τc flow through the three sets of armature windings 1-A, 1-B, and 1-C.

When the magnitude of the torque command τc further increases into the range of 37.5 to 100%, the operation control section 22 determines that the operation stage is IV. In this state, the gain at each of the gain setting sections 23a, 23b, 23c, and 23d is set to 25% and all the PWM control sections 27a, 27b, 27c, and 27d are operated to be the same as in past cases. This causes all the inverters 11A, 11B, 11C, and 11D to operate. When the operation stage switches from III to IV, the current flowing through each of the three sets of armature windings 1-A, 1-B, and 1-C once drops to 37.5%. Subsequently, equal amounts of current proportional, in the range of 37.5 to 100%, to the magnitude of the torque command τc flow through the four sets of armature windings 1-A, 1-B, 1-C, and 1-D.

In the way described above, the inverters can be individually kept out of operation and the four sets of armature windings can be individually left with no current flowing through them according to the torque command τc. Furthermore, while the torque command τc is in the range of 0 to 50%, the motor can be operated without allowing the current to exceed 50% for any set of armature windings. When the torque command exceeds 50% entering the range for the short-time rating, all the four sets of armature windings are energized. Thus, the motor can be operated in an efficient, energy-saving manner with reduced motor loss with the short-time rating taken into account.

Fourth Embodiment

A fourth embodiment is a modification of the third embodiment. The fourth embodiment differs from the third embodiment in that switching of the operation stage is designed to minimize loss. Namely, the magnitudes of the torque command τc to cause switching of the operation stage are set such that the total loss is minimized with the proportions of losses such as iron loss, copper loss and switching loss taken into consideration.

FIG. 11 shows example torque command ranges corresponding to the four operation stages set differently from the second embodiment based on the above point of view. As shown, the operation stage is switched when the magnitude of the torque command τc is 20%, 40%, and 60%. The gains at the gain setting sections and whether or not PWM control is performed at each PWM control section in each operation stage are the same as for the second embodiment.

The magnitude ranges of the torque command τc, shown in FIG. 11, corresponding to the four operation stages are examples and they may be differently arranged to minimize the loss. For example, in cases where a pattern of system operation is established and a time-wise distribution of torque requirement is known, it is possible to switch the operation stage based on the system operation pattern so as to minimize the loss caused in the system. In the case of a servo press machine, for example, pressing is performed according to a slide motion command. Different torque requirements at different slide positions can be determined by conducting a simulation or test operation, so that the distribution of torque requirement by position and time can be known beforehand. It is therefore possible to determine when to switch the operation stage

so as to minimize the loss occurring during the whole operation.

In cases where, as described above, the distribution of operation loss depends on a condition other than a torque command (for example, depends on a position command or a time command), switching of the operation stage can be controlled based on such a condition. There may also be cases where the loss distribution is mainly affected neither by position nor by time but by motor speed. In such cases, the operation stage may be switched according to the motor speed. Furthermore, switching of the operation stage may be controlled based on plural conditions, for example, a torque command and a motor speed, if doing reduces the loss.

As described above, controlling a motor taking into consideration the characteristics of the machine to be driven by the motor allows the motor loss to be reduced more to achieve highly efficient motor operation.


Fifth Embodiment

According to the first to fourth embodiments, the total loss in motor operation can be reduced more than in past cases, but loss may occur concentratedly in a specific inverter or armature windings. A fifth embodiment of the present invention is aimed at solving such a possible problem. The fifth embodiment is based on the same system configuration as that of the second embodiment shown in FIG. 5. In the fifth embodiment, control is performed so as to make loss uniform between inverters or between plural sets of armature windings.

According to the first to fourth embodiments, in the operation stage I corresponding to the torque command $\tau c$ of a small magnitude, the inverter 11A is operated causing a current to flow through the armature windings 1-A. When the magnitude of the torque command increases causing the operation stage to be switched from I to II, in addition to the inverter 11A and armature windings 1-A operated in the operation stage I, the inverter 11B is also operated causing a current to flow through the armature windings 1-B. When the operation stage is switched from II to III, the inverter 11C is additionally operated causing a current to flow though the armature windings 1-C. When the operation stage is switched from III to IV, the inverter 11D is additionally operated causing a current to flow through the armature windings 1-D.

As described above, regardless of the operation stage, the inverter 11A and the armature windings 1-A are kept operating and, in the operation stages II through IV, the inverter 11B and the armature windings 1-B are kept operating. Thus, the inverter 11A and the armature windings 1-A that are kept operating with a current always flowing through them generate more loss and more heat than the other inverters and armature windings. In terms of the loss and heat generation, the inverter 11A and the armature windings 1-A are followed by the inverter 11B and the armature windings 1-B.

In the fifth embodiment, different inverters and armature windings are operated in different operation stages not to cause specific inverters and armature windings to be operated more heavily than others. As a result, loss generation is prevented from concentrating in specific inverters and armature windings. FIG. 12 shows an example of control performed in the above manner to be different from the control performed in the first embodiment.

As seen from FIG. 12, control performed in the operation stages I and IV is the same as the control performed in the second embodiment shown in FIG. 7. Unlike in the second embodiment, however, in the operation stage II, the gain at each of the gain setting sections 23b and 23c is set to 50%, whereas the gain at each of the other gain setting sections is set to 0, and the PWM control sections 27b and 27c operate, whereas the other PWM control sections do not. In the operation stage III, the gain at each of the gain setting sections 23b, 23c, and 23d is set to 33.3%, whereas the gain at the gain setting section 23a is set to 0, and the PWM control sections 27b, 27c, and 27d operate, whereas the PWM control section 27a does not. In this way, the inverter 11A and the armature windings 1-A are prevented from being kept in operation. Since the operating periods of the inverters and armature windings become approximately identical, the losses generated by them also become approximately identical.

The operation control shown in FIG. 12 is only one example. The length of each operation stage differs depending on the actual load or load pattern, so that the inverters to be operated in the respective operation stages may be appropriately determined so as to make the operating period and loss generation approximately uniform between the respective inverters and armature windings. Namely, the magnitude ranges of the torque command corresponding to the operation stages I to IV are to be determined depending on the load to be driven or load pattern so as to make loss generation approximately uniform between the respective inverters and armature windings.

According to the fifth embodiment, the losses generated in plural components can be approximately uniformized. It is therefore possible to enhance the system reliability and increase the continuous rating.

Sixth Embodiment

A sixth embodiment of the present invention is also aimed at solving the same problem as described in connection with the fifth embodiment. In the sixth embodiment, the inverters operated in each operation stage vary according to the timing of the operation stage. For example, when the operation stage 1 is entered at a certain timing, the inverter 11A and the armature windings 1-A are operated (mode 1) as shown in FIG. 7, but, when the operation stage 1 is entered at another timing, the inverter 11C and the armature windings 1-C are operated (mode 2). When the operation stage 1 is entered at a still another timing, the inverter 11B and the armature windings 1-B are operated (mode 3). When the operation stage 1 is entered at a still another timing, the inverter 11D and the armature windings 1-D are operated (mode 4). Namely, the inverters to be operated in the respective operation stages vary without being fixed.

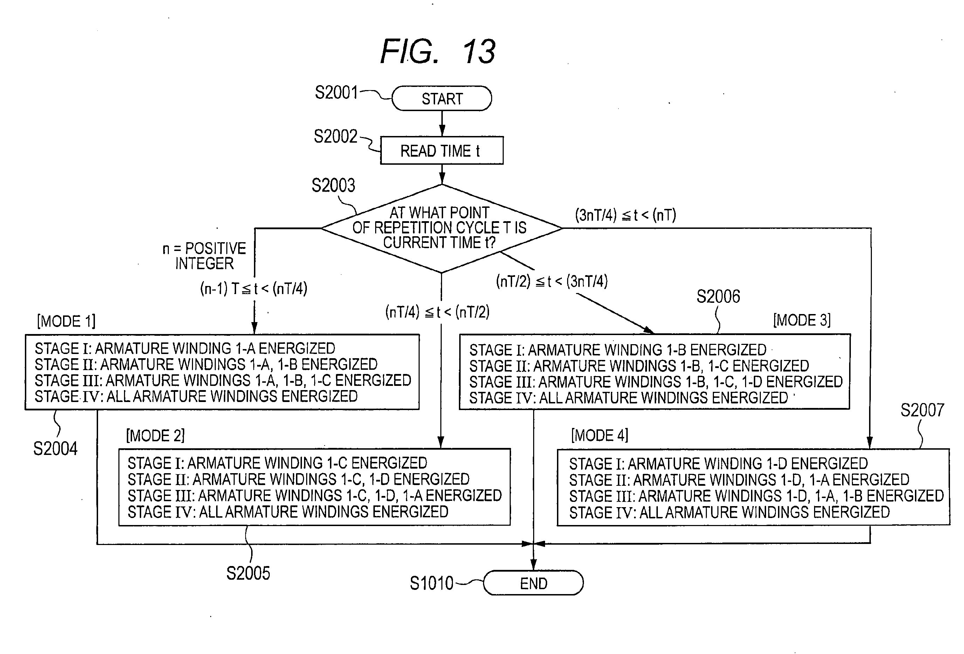

FIG. 13 is an operation flowchart showing example operation steps which the operation control section 22 performs according to the sixth embodiment in addition to the operation steps performed according to the first embodiment. When the cycle of switching through the above modes is represented by T, which mode is to be entered is determined according to the relationship between the above cycle T and the time t that has elapsed in the cycle.

Referring to FIG. 13, elapsed time t is read (S2002) and it is determined where elapsed time t stands in repetition cycle T (S2003) . When the relationship between elapsed time t and repetition cycle T is "$(n - 1)T \leq t < (nT/4)$" (where n is a positive integer), the armature windings corresponding to the operation stage determined according to the torque command for mode 1 are energized, as shown in frame S2004. When the relationship is "$(nT/4) \leq t < (nT/2)$", the armature windings corresponding to the operation stage determined according to the torque command for mode 2 are energized, as shown in frame S2005. When the relationship is "$(nT/2) \leq t < (3nT/4)$", the armature windings corresponding to the operation stage determined according to the torque command for mode 3 are energized, as shown in frame S2006. When the relationship is "$(3nT/4) \leq t < (nT)$", the armature windings corresponding to the operation stage determined according to the torque command for mode 4 are energized, as shown in frame S2007.

As described above, a control mode is determined based on time, and the inverters and armature windings operated are changed between operation stages and according to the control mode. In this way, the losses occurring in the respective inverters and respective armature windings become approximately identical. This prevents specific inverters or specific armature windings from being subjected to concentrated temperature rises.

In the operation performed as shown in FIG. 13, the repetition cycle T is determined for application to mode switching, but the value of T may be randomly changed. The mode may be switched not only based on time but also based on repetitive operation patterns. It is also possible to measure the temperatures of inverter portions or armature winding portions or measure values equivalent to such temperatures and specify an inverter and armature windings whose temperatures are relatively low for operation in the operation stage I that is longer than the other operation stages.

The above approach can also be used to make loss generation approximately uniform between the respective inverters and armature windings so as to enhance the system reliability and increase the continuous rating.

Seventh Embodiment

A seventh embodiment of the present invention is also aimed at solving the same problem as described in connection with the fifth embodiment. According to the first to fourth embodiments, while the magnitude of the torque command $\tau c$ is small, the inverter 11A is kept operating causing the armature windings 1-A to be kept energized, so that they generate more heat than the other inverters and armature windings.

The seventh embodiment is aimed at avoiding such a problem in a manner different from those used by the fifth and sixth embodiments. In the seventh embodiment, the ratings of the inverters are varied orderly for the inverter 11A to be kept energized for a relatively long period of time through the inverter 11D to be energized for a relatively short period of time. Namely, the inverters are configured to be ordered, in terms of rating, 11A > 11B > 11C > 11D without changing the maximum allowable current value. To realize such configuration, the cooling capacity of the fin to cool the main power device may be changed, or the cooling capacity of the armature winding section may be increased.

By arranging the inverter configuration as described above, the problem of concentrated heat generation in specific parts can be avoided to increase system reliability. Even though, in the seventh embodiment described above, the four inverters, i.e. the longest operated one through the shortest operated one, have four correspondingly varied ratings, they may be configured to have two ratings, large and small, or three ratings instead of four.

Eighth Embodiment

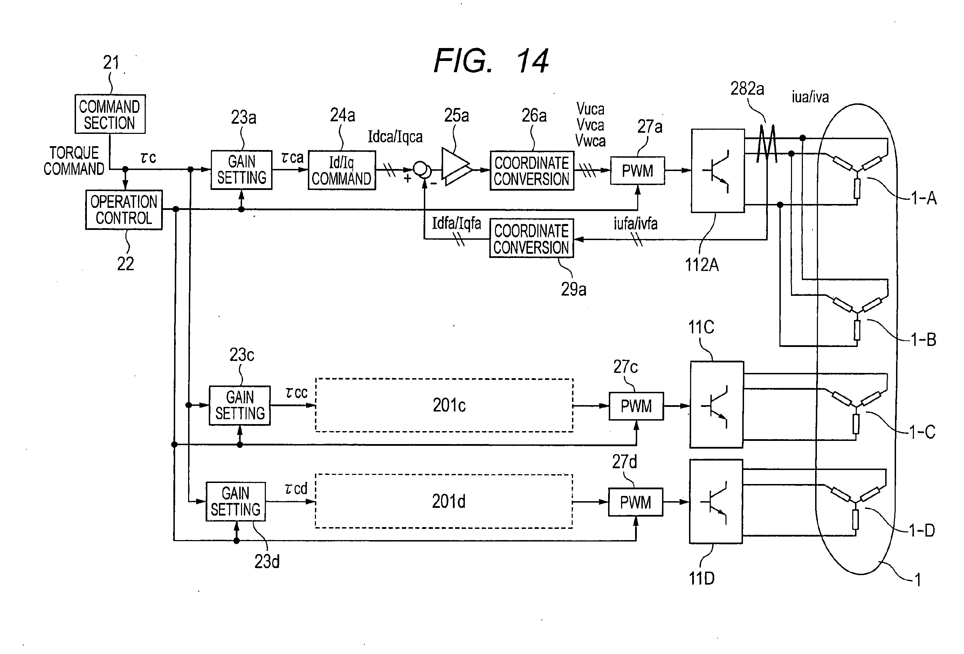

An eighth embodiment of the present invention is also aimed at solving the same problem as described in connection with the fifth embodiment. Even though, in the seventh embodiment, the thermal ratings of the inverters are varied, the inverter ratings may also be changed by increasing their maximum conversion capacity. FIG. 14 shows a control block used in the eighth embodiment in which the conversion capacity of the inverter to be kept energized has been increased. In FIG. 14, the same components as those shown in FIG. 5 are denoted by the same reference numerals as those used in FIG. 5. In FIG. 14, the inverters 11A and 11B shown in FIG. 5 are replaced by an inverter 112A which has a conversion capacity (current capacity) at least two times that of each of the inverters 11A and 11B and which applies currents to both the armature windings 1-A and 1-B.

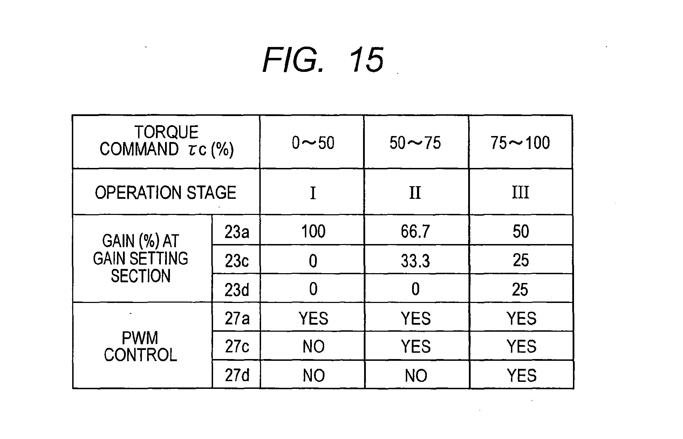

FIG. 15 shows example control operations performed by the operation control section 22. When the magnitude of the torque command τc is in the range of 0 to 50%, the operation stage I (out of the operation stages I, II, and III) is entered. In the operation stage I, the gain at the gain setting section 23a is set to 100%, whereas the gain at each of the other gain setting sections is set to 0, and only the PWM control section 27a operates causing the inverter 112A to operate, whereas the other inverters do not operate. In this state, a current proportional, in the range of 0 to 100%, to the magnitude of the torque command τc flows through each of the armature windings 1-A and 1-B.

Next, when the magnitude of the torque command τc is in the range of 50 to 75%, the operation stage II is entered. In the operation stage II, the gain at the gain setting section 23a is set to 66.7% and the gain at the gain setting section 23c is set to 33.3%, whereas the gain at the gain setting section 23d is set to 0, and the PWM control sections 27a and 27c operate causing the inverters 112A and 11C to operate, whereas the inverter 11D does not operate. A current two times as large as the current flowing through the inverter 11C flows through the inverter 112A. Equal amounts of current proportional, in the range of 66.7 to 100%, to the magnitude of the torque command τc flow through the three sets of armature windings 1-A, 1-B, and 1-C.

Furthermore, when the magnitude of the torque command τc is in the range of 75 to 100%, the operation stage III is entered. In the operation stage III, the gain at the gain setting section 23a is set to 50% and the gain at each of the gain setting sections 23c and 23d is set to 25%, and the PWM control sections 27a, 27c, and 27d operate causing all the inverters 112A, 11C, and 11D to operate. A current two times as large as the current flowing through each of the inverters 11C and 11D flows through the inverter 112A. Equal amounts of current proportional, in the range of 75 to 100%, to the magnitude of the torque command τc flow through the four sets of armature windings 1-A, 1-B, 1-C, and 1-D.

By arranging the inverter configuration as described above, the problem of concentrated heat generation in specific parts can be avoided to increase system reliability in an energy-saving manner.

Ninth Embodiment

A ninth embodiment of the present invention is aimed at solving the same problem as described in connection with the fifth embodiment using a different approach. In the case of the second embodiment, when compared based on a same torque command, a current four times as large as the armature current observed in comparable past cases flows through the armature windings 1-A in the operation stage I entered when the magnitude of the torque command is in the range of 0 to 25%, even though no current flows through the armature windings 1-B, 1-C, and 1-D. Since the copper loss of the motor is proportional to the square of the current flowing through the motor, the copper loss of the motor as a whole becomes four times as large as the copper loss observed in comparable past cases.

In the operation stage II entered when the magnitude of the torque command is in the range of 25 to 50%, when compared based on a same torque command, a current two times as large as the armature current observed in comparable past cases flows through each of the two sets of armature windings 1-A and 1-B, so that the copper loss increases two times. Similarly, in the operation stage III entered when the magnitude of the torque command is in the range of 50 to 75%, the current that flows through each of the three sets of armature windings 1-A, 1-B, and 1-C is, when compared based on a same torque command, 1.3 times as large as the current observed in comparable past cases. As a result, the copper loss of the motor as a whole increases about 1.3 times.

In the case of a device in which copper loss accounts for a large portion of the total loss, reducing the loss other than the copper loss and driving the device according to the second embodiment does not necessarily reduce the total loss occurring in the device. The ninth embodiment is intended for application in such a case.

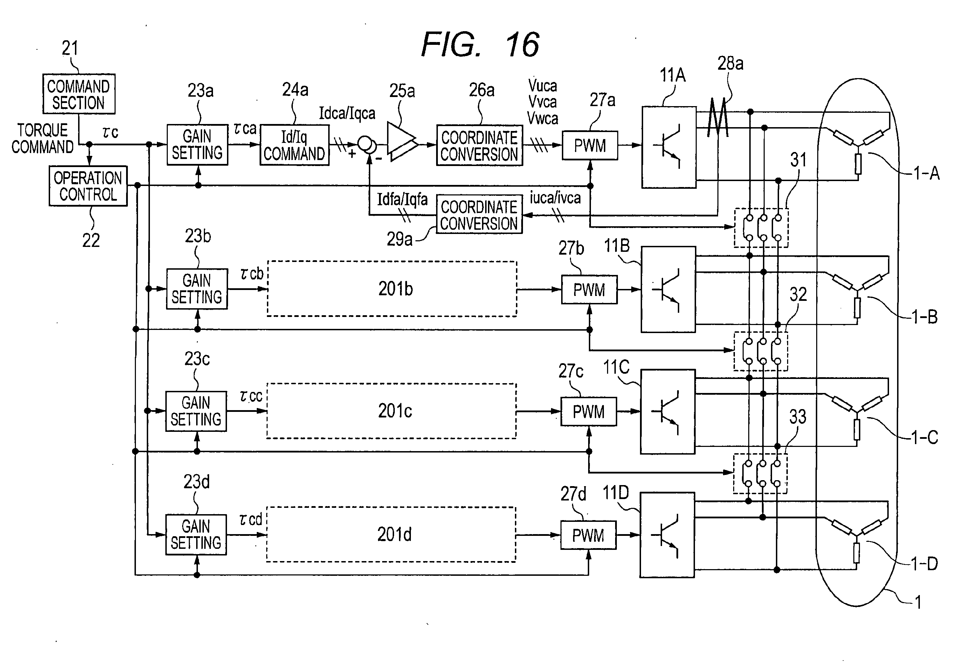

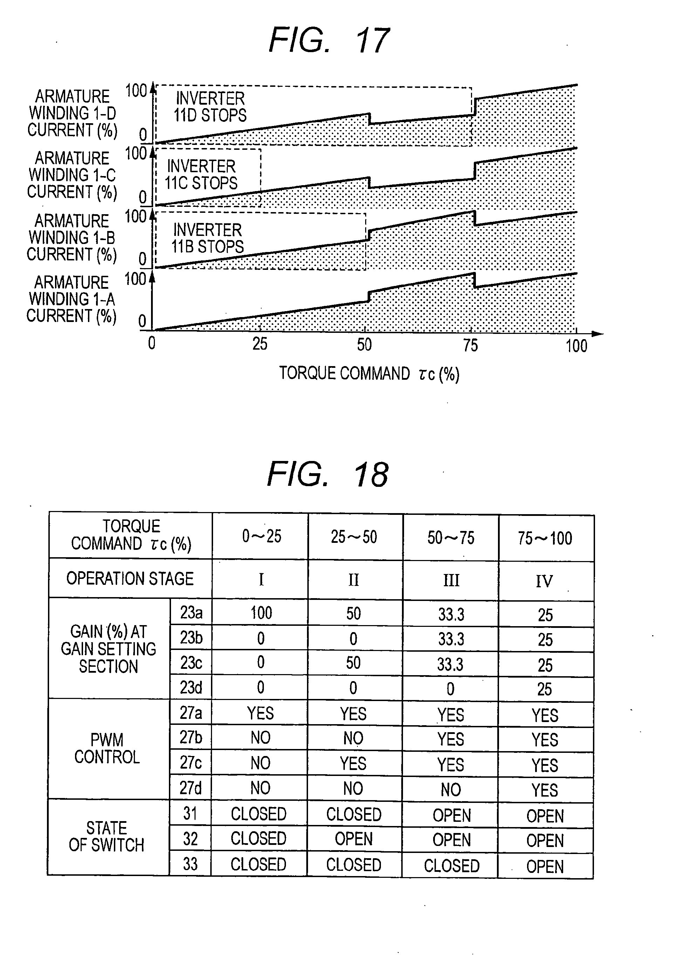

FIG. 16 shows a control block used in the ninth embodiment. In FIG. 16, the same components as those shown in FIG. 5 are denoted by the same reference numerals as those used in FIG. 5. The control block shown in FIG. 16 includes a switch 31 interconnecting the output lines of the inverters 11A and 11B, a switch 32 interconnecting the output lines of the inverters 11B and 11C, and a switch 33 interconnecting the output lines of the inverters 11C and 11D. The switches 31, 32, and 33, the gain setting sections 23a, 23b, 23c, and 23d, and the PWM control sections 27a, 27b, 27c, and 27d are controlled as shown in FIG. 18 according to the stage signal from the operation control section 22.

FIG. 18 shows the control commands outputted from the operation control section 22 according to the torque command. The control commands control, according to the magnitude (ratio relative to the maximum magnitude (100%)) of the torque command, the gain at each of the gain setting sections 23a, 23b, 23c, and 23d, whether to perform PWM control at each of the PWM control sections 27a, 27b, 27c, and 27d, and the open/closed state of each of the switches 31, 32, and 33. The operations performed under the control of the control commands are shown in FIG. 17. Namely, FIG. 17 shows how the amount of current flowing through each of the armature windings vary, in the range of 0 to 100%, according to the magnitude (%) of the torque command and the manner in which the inverters 11A, 11B, 11C, and 11D are operated.

As seen from FIG. 17, in the operation stage I entered when the magnitude of the torque command τc is in the range of 0 to 25%, the gain at the gain setting section 23a is set to 100%, whereas the gain at each of the other gain setting sections is set to 0; only the PWM control section 27a is operated out of the four PWM control sections; and the switches 31, 32, and 33 are closed. In this state, out of the four inverters, only the inverter 11A operates to provide a current to each of the four sets of armature windings. The current flowing through the inverter 11A ranges from 0 to 100% in proportion to the magnitude of the torque command. The current is divided into four to flow through the four sets of armature windings, so that a current proportional, in the range of 0 to 25%, to the torque command τc flows through each of the four sets of armature windings.

In the operation stage II entered when the magnitude of the torque command τc is in the range 25 to 50%, the gain at each of the gain setting sections 23a and 23c is set to 50%, whereas the gain at each of the other gain setting sections is set to 0; only the PWM control sections 27a and 27c out of the four PWM control sections are operated; and only the switches 31 and 33 out of the three switches are closed. In this state, out of the four inverters, only the inverters 11A and 11C operate with the inverter 11A providing a current to each of the two sets of armature windings 1-A and 1-B and the inverter 11C providing a current to each of the two sets of armature windings 1-C and 1-D. The current flowing through each of the inverters 11A and 11C ranges from 50 to 100%. The current flowing through each set of armature windings is proportional, in the range of 25 to 50%, to the magnitude of the torque command τc.

In the operation stage III entered when the magnitude of the torque command τc increases into the range of 50 to 75%, the gain at each of the gain setting sections 23a, 23b, and 23c is set to 33.3%, whereas the gain at the gain setting section 23d is set to 0; the PWM control sections 27a, 27b, and 27c are operated; and only the switch 33 is closed. In this state, the inverters 11A, 11B, and 11C operate with the inverter 11A providing a current to the armature windings 1-A, the inverter 11B providing a current to the armature windings 1-B, and the inverter 11C providing a current to each of the two sets of armature windings 1-C and 1-D. The current flowing through each of the inverters 11A, 11B, and 11C is proportional, in the range of 66.7 to 100%, to the magnitude of the torque command τc. As a result, a current proportional, in the range of 66.7 to 100%, to the magnitude of the torque command τc flows through each of the two sets of armature windings 1-A and 1-B, and a current proportional, in the range of 33.3 to 50%, to the magnitude of the torque command τc flows through each of the two sets of armature windings 1-C and 1-D.

In the operation stage IV entered when the magnitude of the torque command τc increases into the range or 75 to 100%, the gain at each of the gain setting sections 23a, 23b, 23c, and 23d is set to 25%; all the four PWM control sections 27a, 27b, 27c, and 27d are operated; and all the switches 31, 32, and 33 are open. In this state, all the inverters 11A, 11B, 11C, and 11D operate to provide currents to the four sets of armature windings 1-A, 1-B, 1-C, and 1-D, respectively. The current flowing through each of the inverters 11A, 11B, 11C, and 11D is proportional, in the range of 75 to 100%, to the magnitude of the torque command τc, and a current in the range of 75 to 100% flows through each of the four sets of armature windings 1-A, 1-B, 1-C, and 1-D.

As described above, the inverters operate or stop operating according to the operation stage, causing currents approximately proportional to the magnitude of the torque command to flow through the corresponding sets of armature windings. In this way, while reducing the inverter switching loss, it is also possible to reduce the copper loss of the motor.

The switches 31, 32, and 33 shown in FIG. 16 need not necessarily be mechanical switches. They may be, for example, electronic switches which can be controlled at high speed. The connections of the switches interconnecting phases of armature windings are shown as examples. The switches may be connected differently or controlled by different means. Furthermore, in the operation stage III, the amounts of current flowing through the respective sets of armature windings are not identical. From the standpoint of reducing the total loss, the operation stage III may be omitted, allowing the operation stage IV to continue while the magnitude of the toque command is in the range 50 to 100%.

Using the above configuration, it is possible to successively operate the inverters while keeping a current proportional to the magnitude of the torque command flowing through each set of armature windings. This approach is effective for a device in which copper loss accounts for a large portion of the total loss and allows such a device to be efficiently driven.

Tenth Embodiment

According to a tenth embodiment of the present invention, plural sets of armature windings wound over the stator periphery to be mutually symmetric are excited at a same time. In the foregoing embodiments, the armature windings are sequentially excited according to the torque command. It can, therefore, occur that the magnetic attractive force between the rotor (not shown) and the stator (not shown) differs between where an excited set of windings is located and where an unexcited set of windings is located. In cases where each set of armature windings are uniformly wound over the entire stator periphery, there is no problem with the foregoing embodiments. In cases where each set of armature windings are wound locally over the stator periphery, the magnetic attractive force between the rotor and the stator becomes different, along a circumferential direction, between where an excited set of windings are located and where an unexcited set of windings are located. This may cause a problem by making the distribution of magnetic attractive force imbalanced. The tenth embodiment can be applied in such a case and uses the same control configuration, shown in FIG. 5, as used in the second embodiment. For the following description of the tenth embodiment, assume that the two sets of armature windings 1-A and 1-C are wound over the stator periphery to be mutually symmetric (along the circumferential direction of the motor) and the two sets of armature windings 1-B and 1-D are wound over the stator periphery to be mutually symmetric (along the circumferential direction of the motor).

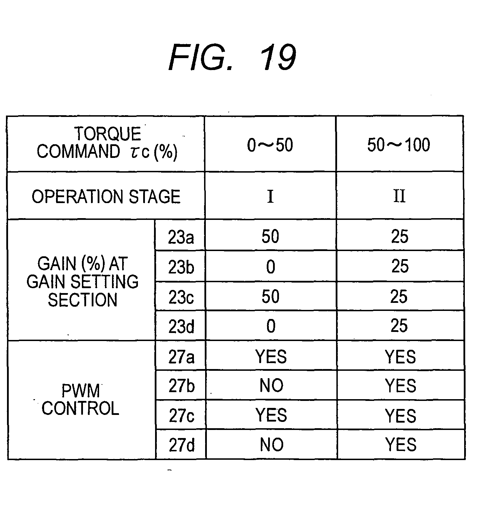

FIG. 19 shows how the operation control section 22 controls the gain setting sections 23a, 23b, 23c, and 23d and the PWM control sections 27a, 27b, 27c, and 27d. In the operation stage I entered when the torque command τc is in the range of 0 to 50%, the gain at each of the gain setting sections 23a and 23c is set to 50%, whereas the gain at each of the other gain setting sections is set to 0, and the PWM control sections 27a and 27c are operated. In this state, the inverters 11A and 11C operate, whereas the other inverters do not. Equal amounts of current proportional, in the range of 0 to 100%, to the torque command τc flow through the armature windings 1-A and 1-C.

In the operation stage II entered when the torque command τc is in the range of 50 to 100%, the gain at each of the gain setting sections 23a, 23b, 23c, and 23d is set to 25%, all the PWM control sections 27a, 27b, 27c, and 27d operate, and all the inverters 11A, 11B, 11C, and 11D operate. Equal amounts of current proportional, in the range of 50 to 100%, to the torque command τc flow through the four sets of armature windings 1-A, 1-B, 1-C, and 1-D.

In the tenth embodiment as compared with the first embodiment, the numbers of inverters and armature windings kept out of operation according to the torque command account for smaller proportions of all the inverters and armature windings, so that the total loss increases as compared with the first embodiment. In the tenth embodiment, however, the problem of imbalanced magnetic attractive forces between the rotor and the stator does not occur.


Eleventh Embodiment


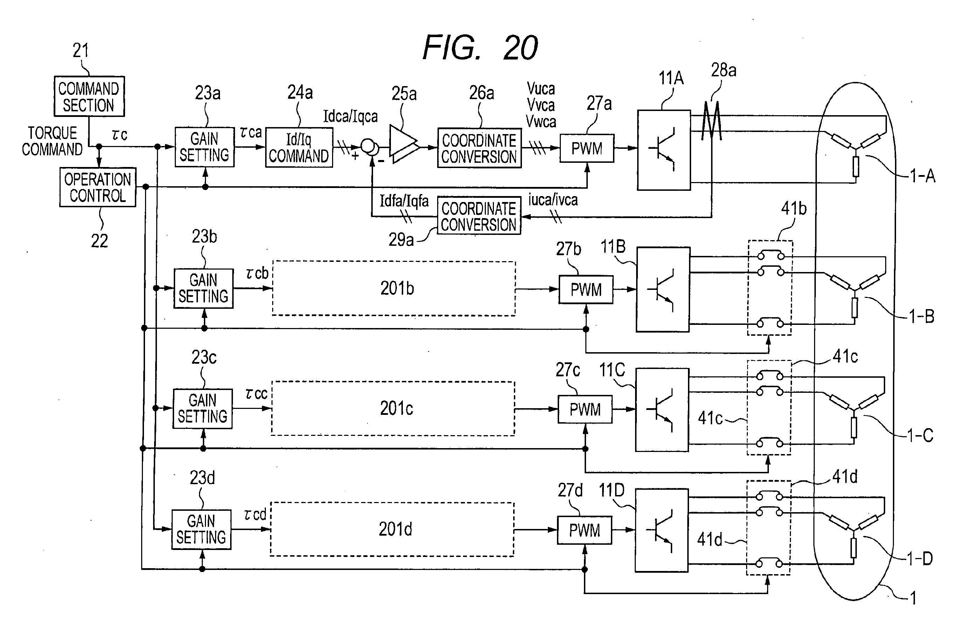

In an eleventh embodiment of the present invention, when an inverter causing a current to flow through the AC motor 1 stops operation, the connection between the inverter and the corresponding set of armature windings is broken without fail. FIG. 20 shows a control block which is similar to the control block shown in FIG. 5 but includes additional arrangements required for the eleventh embodiment. In FIG. 20, the same components as those shown in FIG. 5 are denoted by the same reference numerals as those used in FIG. 5. The control block shown in FIG. 20 includes switches 41b, 41c, and 41d for making and breaking the connections between the inverters 11B, 11C, and 11D and the armature windings 1-B, 1-C, and 1-D, respectively.

In the eleventh embodiment, the PWM control sections 27b, 27c, and 27d are controlled according to an operation command signal (stage signal) from the operation control section 22. The operation command signal is outputted from the operation control section 22 to open and close the switches 41b, 41c, and 41d. When the PWM control sections 27b, 27c, and 27d operate to drive the corresponding inverters 11B, 11C, and 11D, the switches 41b, 41c, and 41d provided on the output side of the inverters are closed. When the PWM control sections 27b, 27c, and 27d stop operating not to drive the corresponding inverters 11B, 11C, and 11D, the switches 41b, 41c, and 41d provided on the output side of the inverters are opened. When, for example, the PWM control section 27b operates causing the inverter 11b to operate, the switch 41b is closed. When the PWM control section 27b stops operating causing the inverter 11b to stop operating, the switch 41b is opened.

When, according to whether the inverters are operated or not, the corresponding switches are closed or opened as described above, no regenerative current from the motor armature side can flow into the inverters in a deactivated state. Hence, no regenerative current can generate resistance against the rotor rotation. This makes loss reduction possible. When field control is performed, there are cases where the maximum motor-induced voltage exceeds the DC voltage of an inverter. The eleventh embodiment can be effectively applied in such cases.

Note that the locations of the switches shown in FIG. 20 are for when the switches are additionally included in the control block, shown in FIG. 5, for the second embodiment. When adopting the switches for other embodiments, it may become necessary to connect the switches in different locations than shown in FIG. 20.


Twelfth Embodiment


A twelfth embodiment of the present invention differs from the foregoing embodiments in gain setting control performed by the gain setting sections. In the foregoing embodiments, the gains at the gain setting sections 23a, 23b, 23c, and 23d are switched at a time according to the torque command τc, causing the torques generated by the respective sets of armature windings to change at a time. This may cause a torque disturbance. In the twelfth embodiment, when the operation control section 22 switches the gains at the gain setting sections, the gains are gradually varied toward the values switched to.

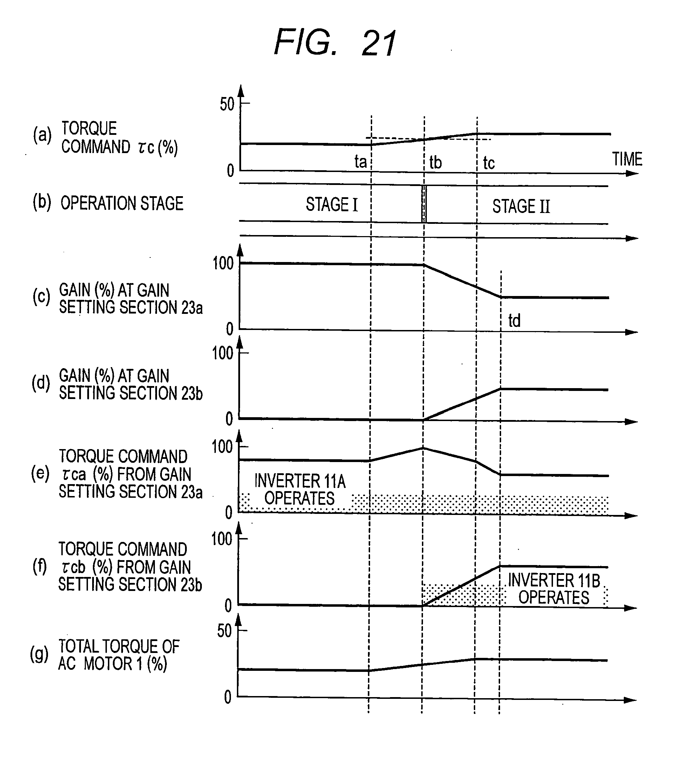

FIG. 21 shows the control operations performed according to the twelfth embodiment based on the configuration for the foregoing second embodiment (shown in FIG. 5). In concrete terms, FIG. 21 shows how the gains are varied when the magnitude of the torque command exceeds 25% causing the operation stage to be switched from I to II. The manner in which the gains are controlled after a new operation stage is entered is different from the manner in which the gains are controlled in the second embodiment.

Referring to FIG. 21, (a) denotes the torque command 21 τc; (b) the operation stage corresponding, as shown in FIG. 7, to the torque command; (c) the gain at the gain setting section 23a; (d) the gain at the gain setting section 23b; (e) the torque command τca outputted from the gain setting section 23a for the armature windings 1-A; (f) the torque command τcb outputted from the gain setting section 23b for the armature windings 1-B; and (g) the total torque of the AC motor 1. In the present example, as shown as (a), the torque command τc is kept at 20% from time 0 to time ta, starts gradually increasing at time ta, becomes 25% when the operation stage is switched from I to II at time tb, and reaches 30% at time tc to be then kept constant. As shown, the operation stage I lasts from time 0 to time tb, and the operation stage II is kept after time tb.

The gain at the gain setting section 23a is, as shown as (c), kept at 100% until time tb is reached in the operation stage I, starts gradually decreasing when the operation stage is switched from I to II at time tb, and reaches 50% at time td. The gain at the gain setting section 23b is, as shown as (d), kept at 0% until time tb is reached in the operation stage I, starts gradually increasing when the operation stage is switched from I to II at time tb, and reaches 50% at time td. As a result, the torque command outputted from each gain setting section for the corresponding set of armature windings as the product of the torque command τc and the gain at the gain setting section is controlled as follows. Namely, the torque command τca outputted from the gain setting section 23a is, as shown as (e), kept at 80% until time ta is reached, starts gradually increasing at time ta, and reaches 100% at time tb. Since the gain decreases after the operation stage is switched from I to II, the torque command τca starts decreasing at time tb, and reaches 60% at time td to be then kept at the same level. The torque command τcb outputted from the gain setting section 23b is, as shown as (f), kept at 0% until time tb is reached. During this time, the inverter 11B is not operated. When the operation stage is switched from I to II at time tb, the inverter 11B starts operating and starts gradually increases. The torque command τcb reaches 60% at time td to be then kept at the same level. During the operation stages I and II shown in FIG. 21, the gain at each of the gain setting sections 23c and 23d is kept at 0, whereas the total gain at the gain setting sections 23a and 23b is kept at 100%. This makes the total torque, corresponding to (e) + (f) and shown as (g), generated by the motor 1 proportional to the torque command τc shown as (a).

Gradually changing the gain at a gain setting section when the operation stage is switched causes the torque generation at the corresponding set of armature wirings to change also gradually, so that no torque disturbance results. This applies not only to when the operation stage is switched from I to II as described above with reference to FIG. 21 but also to when the operation stage is switched differently, for example, even when the operation stage is switched from I to III as a result of a large change in the magnitude of the torque command.

As a way of gradually changing the gains at the gain setting sections 23, an arrangement may be made such that gradually varying operation command signals (stage signals) are outputted from the operation control section 22, or each gain setting section may incorporate a circuit configured to gradually change the gain according to an operation command signal. Instead of gradually changing, when the operation stage is switched, the gain at each gain setting section by performing time-wise control as in the twelfth embodiment, an equivalent effect may be obtained by gradually changing the gain in proportion to the magnitude of the torque command τc. Since, when the operation stage is switched, the gain at each gain setting section is changed gradually, there can be cases where the current flowing through each set of armature windings exceeds 100%. This can be prevented by appropriately changing the magnitudes of the torque command τc used to switch the operation stage.

As described above, the configuration of the twelfth embodiment makes it possible to change, when the operation stage is switched, the armature windings to be energized without changing the motor torque.

Thirteenth Embodiment

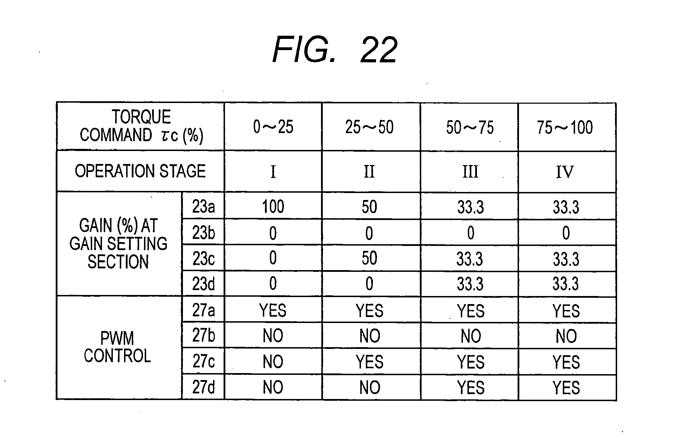

In a thirteenth embodiment of the present invention, the number of inverters to be operated and/or the number of sets of armature windings to be energized can be changed according to the torque command. According to the thirteenth embodiment, therefore, it is possible, if an inverter goes out of order, to continue driving the motor without using the inverter. The following description of the thirteenth embodiment is based on the assumption that, in the configuration of the second embodiment (shown in FIG. 5), the inverter 11B goes out of order and that the motor operation is continued without using the inverter 11B. FIG. 22 shows example control operations performed in the above case. Going out of order of the inverter 11B is assumed to have been detected by a fault detector, not shown.

In the operation stage I entered when the torque command is in the range of 0 to 25%, the gain at the gain setting section 23a is set to 100% and, out of the four PWM control sections, only the PWM 27a is operated to operate the inverter 11A. In the present example, when the torque command enters the range of 25 to 50%, the fault detector detects that the inverter 11B is out of order and, as a result, the operation is continued without using the inverter 11B. Namely, the gain at each of the gain setting sections 23a and 23c is set to 50%, and the PWM control sections 27a and 27c are operated to operate the inverters 11A and 11C. Furthermore, when the torque command enters the range of 50 to 75% and the operation stage III is entered, the gain at each of the gain setting sections 23a, 23c, and 23d is set to 33.35% and the PWM control section 27a, 27c, and 27d are operated to operate the inverters 11A, 11C, and 11D. In this way, by using the other inverters than the inverter 11B that has gone out of order, the motor can be driven continuously.

When the torque command increases into the range of 75 to 100% and the operation stage IV is entered, the gains at the respective gain setting sections and the PWM control sections to be operated are unchanged from the operation stage III. This causes the output current of each operating inverter to exceed 100%, causing the inverter to be overloaded. If the inverters 11A to 11D used in such a case are ones designed not to allow an overload exceeding 100%, it is necessary to limit the output current of each inverter to 100% in the control system (at the limiter sections 51 shown in FIG. 1) or make an arrangement to allow the output current of each inverter to exceed 100% only for a limited period of time. This applies also to when any other inverter than the inverter 11B goes out of order.

As described above, according to the thirteenth embodiment, if an inverter goes out of order, the fault detector detects the faulty inverter and causes the other inverters to operate to continuously drive the motor without using the faulty inverter, even though the operation is limited when the torque command exceeds 75%. Note that an inverter can be disabled not only by a fault of its own but also by other factors, for example, a fault in the corresponding main power supply or control power supply. Also note that control can be arranged similarly even when two or more inverters go out of order.

As described above, the thirteenth embodiment enables highly efficient and reliable motor control.

Fourteenth Embodiment

According to a fourteenth embodiment of the present invention, two or more AC motors are used to drive a heavy load.

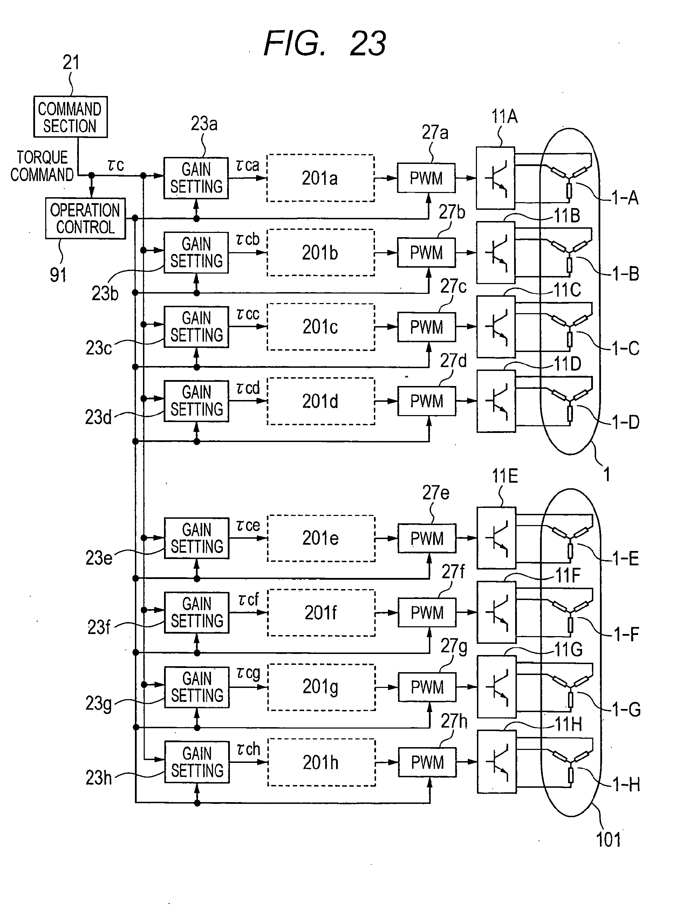

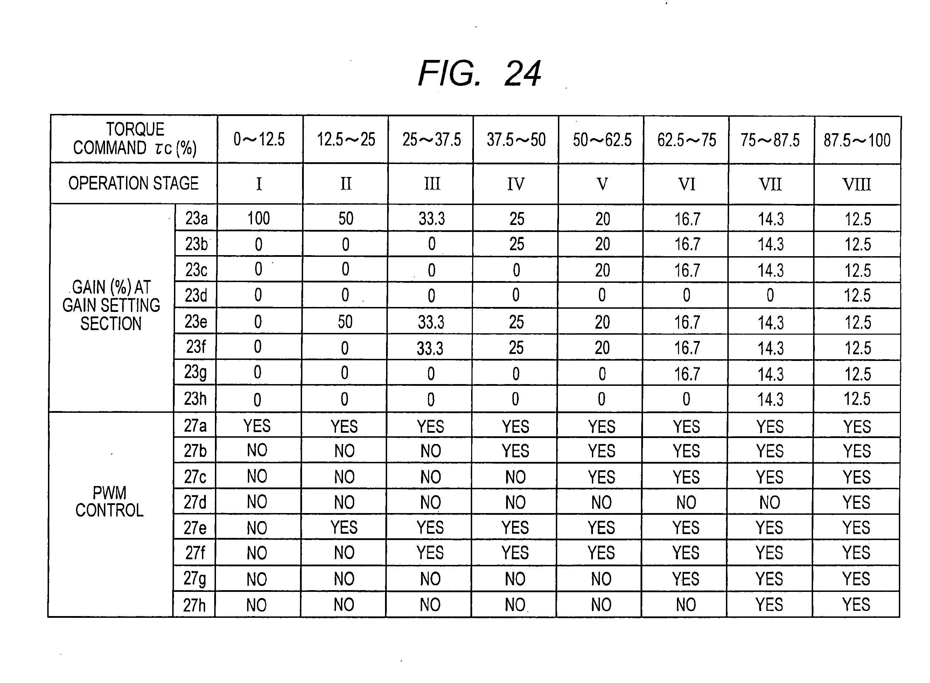

FIG. 23 shows a control block used in the fourteenth embodiment. FIG. 24 shows the control operations performed in each operation stage according to the fourteenth embodiment. In FIG. 23, the same components as those shown in FIG. 5 are denoted by the same reference numerals as those used in FIG. 5. In the fourteenth embodiment, a load is driven using two AC motors, i.e. the AC motor 1 and another AC motor 101, both controlled according to a torque command τc. The AC motor 101 has, like the AC motor 1, four sets of armature windings 1-E, 1-F, 1-G, and 1-H which are driven by inverters 11E, 11F, 11G, and 11H. Gain setting sections 23e, 23f, 23g, and 23h, vector control sections (control devices) 201e, 201f, 201g, and 201h, and PWM control sections 27e, 27f, 27g, and 27h are also provided for use in driving the respective inverters. The gain setting sections 23 and PWM control sections 27 to control the AC motors 1 and 101 operate according to commands from an operation control section 91. The operation control section 91 operates similarly to the procedure shown in FIG. 2, even though more operation stages are involved than shown in FIG. 2.

Assume that, for the armature windings 1-A, τc represents a torque command (%), Ka represents the gain (%) at the gain setting section 23a, τca represents a torque command (%), Iqca represents a q axis current command (%), and Ia represents an armature current magnitude (%). The amount of current made to flow through each of a total of eight sets of armature windings is proportional to the corresponding actual torque command. Hence, where the limiter section(omitted in Fig. 23) does not operate, the following equations apply:

$$\tau ca = Ka \times \tau c/12.5$$
$$Ia = Iqca = \tau ca$$

Similar relationships apply to the other armature windings, too.

As shown in FIG. 24, control is performed in eight operation stages according to the torque command τc. First, in operation stage I entered when the torque command τc is in the range of 0 to 12.5%, the gain at only the gain setting section 23a is set to 100% whereas the gain at each of the other gain setting sections is set to 0, and only the PWM control section 27a operates, whereas the other PWM control sections are kept out of operation. In this state, only the inverter 11A operates, whereas the other inverters do not.

Next, in the operation stage II entered when the torque command τc is in the range of 12.5 to 25%, the gain at each of the gain switching sections 23a and 23e is set to 50%, whereas the gain at each of the other gain setting sections is set to 0, and only the PWM control sections 27a and 27e operate, whereas the other PWM control sections are kept out of operation. In this state, only the inverters 11A and 11E operate, whereas the other inverters do not.

In the operation stage III entered when the torque command τc is in the range of 25 to 37.5%, the gain at each of the gain setting sections 23a, 23e, and 23f is set to 33.3%, whereas the gain at each of the other gain setting sections is set to 0, and the PWM control sections 27a, 27e, and 27f operate, whereas the other PWM control sections are kept out of operation. In the state, the inverters 11A, 11E, and 11F operate, whereas the other inverters do not.

In the other operation stages, too, control is performed in the above manner with the operation control section 91 outputting gain setting commands to the gain setting sections and operation commands to the PWM control sections. As the PWM control sections operate and the inverters are driven, the armature windings are energized.

As described above, plural motors can be efficiently driven by sequentially driving the inverters according to the torque command. Regardless of the operation stage, the total gain at the gain setting sections is kept at 100%, and the ratio between the magnitude of the torque command and the total torque generated by the plural motors is kept constant. Thus, the torque characteristic of the motors can be kept stable.

All the above embodiments have been described based on the assumption that the motor has four sets of armature windings, but the present invention can obviously be applied to cases where the motor has fewer or more than four sets of armature windings. The present invention can also be applied to four quadrant operation including forward motoring operation, forward regenerative operation, reverse motoring operation, and reverse regenerative operation. Furthermore, the number of operation stages and the number of sets of armature windings need not be uniform between motors. Still furthermore, two or more of the above embodiments may be applied in combination when possible.

**Claims**

1. A motor control system, including;
   a motor (1) having a plurality of sets (1-A, 1-B, 1-C, 1-D) of armature windings,
   a plurality of inverters (11A - 11D) which drive the plurality of sets of armature windings individually, and
   a plurality of control devices (201a - 201d) which receive a motor drive command ($\tau$ca-$\tau$cd) and control the inverters individually, the motor control system comprising:

   an operation control section (22) which receives a motor drive command ($\tau$c) for torque control or position control and outputs a stage signal specifying one out of a plurality of operation stages determined according to the magnitude of the motor drive command; and
   a gain setting section (23a - 23d) which receives a stage signal from the operation control section, sets an amount of gain corresponding to an amount of torque to be generated, according to the motor drive command, using each inverter, and outputs the gain to the control device corresponding to the each inverter;
   wherein, out of the plurality of inverters, a required number of inverters determined according to the magnitude of the motor drive command are controlledly driven with the control devices driving or deactivating the corresponding inverters according to the gains set by the gain setting section.

2. The motor control system according to claim 1, wherein the operation control section changes the determined operation stage at a predetermined magnitude of the motor drive command, the magnitude predetermined so as to reduce motor loss.

3. The motor control system according to claim 1, wherein the gain setting section outputs gains to the control devices corresponding to the inverters so as to change the inverters to be driven according to the operation stage.

4. The motor control system according to claim 1, wherein a limiter (51a - 51d) is provided between the gain setting section and each of the control devices, the limiter limiting the gain for the corresponding set of armature windings not to allow the armature windings to generate a torque exceeding a maximum allowable value.

5. The motor control system according to claim 1, wherein the gain setting section outputs gains to the control devices corresponding to the inverters that drive armature windings mutually symmetrically positioned along a circumferential direction of the motor in such a manner that electric current is applied to the armature windings at a time.

6. The motor control system according to claim 1, wherein a switch 41a - 41c) is provided between one or more or each of the inverters and the corresponding set of armature windings and wherein each switch connected to each inverter to be driven according to the stage signal from the operation control section is closed, whereas each switch connected to each inverter not to be driven according to the stage signal is opened.

7. The motor control system according to claim 1, wherein, in changing an inverter to be driven, the gain setting section outputs a gradually varying gain to the control device corresponding to the inverter.

8. A motor control method for controlling a motor having a plurality of sets of armature windings by using a plurality of inverters for individually driving the plurality of sets of armature windings and a plurality of control devices for controlling the inverters individually according to a motor drive command, wherein:

an operation stage is determined, out of a plurality of operation stages, according to the magnitude of the motor drive command received for torque control or position control;

according to the determined operation stage, a gain is set for each inverter, the gain corresponding to an amount of torque to be generated using the inverter to realize a total torque determined by the motor drive command; and a required number of inverters determined according to the magnitude of the motor drive command are controlledly driven, the inverters being driven and deactivated based on the gain set for each inverter.

9. The motor control method according to claim 8, wherein the determined operation stage is switched at a predetermined magnitude of the motor drive command, the magnitude predetermined so as to reduce motor loss.

10. The motor control method according to claim 8, wherein, when an inverter being driven is to be changed according to the determined operation stage, the inverter is controlledly driven based on a gradually varying gain.

11. The motor control method according to claim 8, wherein each inverter is controlledly driven with the gain limited not to allow the corresponding set of armature windings to generate a torque exceeding a maximum allowable value.

**FIG. 1**

## FIG. 2

S1001 — START

S1002 — READ $\tau c$

S1003 — $|\tau c| < 25\%$ ? — YES → S1007 STAGE I

NO

S1004 — $|\tau c| < 50\%$ ? — YES → S1008 STAGE II

NO

S1005 — $|\tau c| < 75\%$ ? — YES → S1009 STAGE III

NO

S1006 — STAGE IV

S1010 — END

# FIG. 3

ARMATURE WINDING 1-D CURRENT (%)

ARMATURE WINDING 1-C CURRENT (%)

ARMATURE WINDING 1-B CURRENT (%)

ARMATURE WINDING 1-A CURRENT (%)

INVERTER 11D STOPS

INVERTER 11C STOPS

INVERTER 11B STOPS

TORQUE COMMAND $\tau c$ (%)

# FIG. 4

| TORQUE COMMAND $\tau c$ (%) | | 0～25 | 25～50 | 50～75 | 75～100 |
|---|---|---|---|---|---|
| OPERATION STAGE | | I | II | III | IV |
| GAIN (TORQUE FORMULA) (%) AT GAIN SETTING SECTION | 23a | 100 | 100 | 100 | 100 |
| | 23b | 0 | ($\tau c$-25) × 100 | 100 | 100 |
| | 23c | 0 | 0 | ($\tau c$-50) × 100 | 100 |
| | 23d | 0 | 0 | 0 | ($\tau c$-75) × 100 |
| PWM CONTROL | 27a | YES | YES | YES | YES |
| | 27b | NO | YES | YES | YES |
| | 27c | NO | NO | YES | YES |
| | 27d | NO | NO | NO | YES |

# FIG. 5

# FIG. 6

ARMATURE WINDING 1-D CURRENT (%)

INVERTER 11D STOPS

ARMATURE WINDING 1-C CURRENT (%)

INVERTER 11C STOPS

ARMATURE WINDING 1-B CURRENT (%)

INVERTER 11B STOPS

ARMATURE WINDING 1-A CURRENT (%)

TORQUE COMMAND τc (%)

# FIG. 7

| TORQUE COMMAND τc (%) | | 0~25 | 25~50 | 50~75 | 75~100 |
|---|---|---|---|---|---|
| OPERATION STAGE | | I | II | III | IV |
| GAIN (%) AT GAIN SETTING SECTION | 23a | 100 | 50 | 33.3 | 25 |
| | 23b | 0 | 50 | 33.3 | 25 |
| | 23c | 0 | 0 | 33.3 | 25 |
| | 23d | 0 | 0 | 0 | 25 |
| PWM CONTROL | 27a | YES | YES | YES | YES |
| | 27b | NO | YES | YES | YES |
| | 27c | NO | NO | YES | YES |
| | 27d | NO | NO | NO | YES |

## FIG. 8

## FIG. 9

## FIG. 10

| TORQUE COMMAND $\tau c$ (%) | | 0~12.5 | 12.5~25 | 25~37.5 | 37.5~100 |
|---|---|---|---|---|---|
| OPERATION STAGE | | I | II | III | IV |
| GAIN (%) AT GAIN SETTING SECTION | 23a | 100 | 50 | 33.3 | 25 |
| | 23b | 0 | 50 | 33.3 | 25 |
| | 23c | 0 | 0 | 33.3 | 25 |
| | 23d | 0 | 0 | 0 | 25 |
| PWM CONTROL | 27a | YES | YES | YES | YES |
| | 27b | NO | YES | YES | YES |
| | 27c | NO | NO | YES | YES |
| | 27d | NO | NO | NO | YES |

## FIG. 11

| TORQUE COMMAND $\tau c$ (%) | | 0~20 | 20~40 | 40~60 | 60~100 |
|---|---|---|---|---|---|
| OPERATION STAGE | | I | II | III | IV |
| GAIN (%) AT GAIN SETTING SECTION | 23a | 100 | 50 | 33.3 | 25 |
| | 23b | 0 | 50 | 33.3 | 25 |
| | 23c | 0 | 0 | 33.3 | 25 |
| | 23d | 0 | 0 | 0 | 25 |
| PWM CONTROL | 27a | YES | YES | YES | YES |
| | 27b | NO | YES | YES | YES |
| | 27c | NO | NO | YES | YES |
| | 27d | NO | NO | NO | YES |

## FIG. 12

| TORQUE COMMAND $\tau c$ (%) | | 0~25 | 25~50 | 50~75 | 75~100 |
|---|---|---|---|---|---|
| OPERATION STAGE | | I | II | III | IV |
| GAIN (%) AT GAIN SETTING SECTION | 23a | 100 | 0 | 0 | 25 |
| | 23b | 0 | 50 | 33.3 | 25 |
| | 23c | 0 | 50 | 33.3 | 25 |
| | 23d | 0 | 0 | 33.3 | 25 |
| PWM CONTROL | 27a | YES | NO | NO | YES |
| | 27b | NO | YES | YES | YES |
| | 27c | NO | YES | YES | YES |
| | 27d | NO | NO | YES | YES |

## FIG. 13

S2001 — START

S2002 — READ TIME t

S2003 — AT WHAT POINT OF REPETITION CYCLE T IS CURRENT TIME t?

$(3nT/4) \leqq t < (nT)$

n = POSITIVE INTEGER

$(n-1) T \leqq t < (nT/4)$

$(nT/4) \leqq t < (nT/2)$

$(nT/2) \leqq t < (3nT/4)$

S2006

[MODE 1]

STAGE I: ARMATURE WINDING 1-A ENERGIZED
STAGE II: ARMATURE WINDINGS 1-A, 1-B ENERGIZED
STAGE III: ARMATURE WINDINGS 1-A, 1-B, 1-C ENERGIZED
STAGE IV: ALL ARMATURE WINDINGS ENERGIZED

S2004

[MODE 3]

STAGE I: ARMATURE WINDING 1-B ENERGIZED
STAGE II: ARMATURE WINDINGS 1-B, 1-C ENERGIZED
STAGE III: ARMATURE WINDINGS 1-B, 1-C, 1-D ENERGIZED
STAGE IV: ALL ARMATURE WINDINGS ENERGIZED

S2007

[MODE 2]

STAGE I: ARMATURE WINDING 1-C ENERGIZED
STAGE II: ARMATURE WINDINGS 1-C, 1-D ENERGIZED
STAGE III: ARMATURE WINDINGS 1-C, 1-D, 1-A ENERGIZED
STAGE IV: ALL ARMATURE WINDINGS ENERGIZED

S2005

[MODE 4]

STAGE I: ARMATURE WINDING 1-D ENERGIZED
STAGE II: ARMATURE WINDINGS 1-D, 1-A ENERGIZED
STAGE III: ARMATURE WINDINGS 1-D, 1-A, 1-B ENERGIZED
STAGE IV: ALL ARMATURE WINDINGS ENERGIZED

S1010 — END

EP 2 355 332 A2

27

FIG. 14

EP 2 355 332 A2

# FIG. 15

| TORQUE COMMAND $\tau$c (%) | | 0~50 | 50~75 | 75~100 |
|---|---|---|---|---|
| OPERATION STAGE | | I | II | III |
| GAIN (%) AT GAIN SETTING SECTION | 23a | 100 | 66.7 | 50 |
| | 23c | 0 | 33.3 | 25 |
| | 23d | 0 | 0 | 25 |
| PWM CONTROL | 27a | YES | YES | YES |
| | 27c | NO | YES | YES |
| | 27d | NO | NO | YES |

# FIG. 16

EP 2 355 332 A2

# FIG. 17

ARMATURE WINDING 1-D CURRENT (%)

INVERTER 11D STOPS

ARMATURE WINDING 1-C CURRENT (%)

INVERTER 11C STOPS

ARMATURE WINDING 1-B CURRENT (%)

INVERTER 11B STOPS

ARMATURE WINDING 1-A CURRENT (%)

TORQUE COMMAND $\tau c$ (%)

# FIG. 18

| TORQUE COMMAND $\tau c$ (%) | | 0~25 | 25~50 | 50~75 | 75~100 |
|---|---|---|---|---|---|
| OPERATION STAGE | | I | II | III | IV |
| GAIN (%) AT GAIN SETTING SECTION | 23a | 100 | 50 | 33.3 | 25 |
| | 23b | 0 | 0 | 33.3 | 25 |
| | 23c | 0 | 50 | 33.3 | 25 |
| | 23d | 0 | 0 | 0 | 25 |
| PWM CONTROL | 27a | YES | YES | YES | YES |
| | 27b | NO | NO | YES | YES |
| | 27c | NO | YES | YES | YES |
| | 27d | NO | NO | NO | YES |
| STATE OF SWITCH | 31 | CLOSED | CLOSED | OPEN | OPEN |
| | 32 | CLOSED | OPEN | OPEN | OPEN |
| | 33 | CLOSED | CLOSED | CLOSED | OPEN |

## FIG. 19

| TORQUE COMMAND $\tau c$ (%) | | 0~50 | 50~100 |
|---|---|---|---|
| OPERATION STAGE | | I | II |
| GAIN (%) AT GAIN SETTING SECTION | 23a | 50 | 25 |
| | 23b | 0 | 25 |
| | 23c | 50 | 25 |
| | 23d | 0 | 25 |
| PWM CONTROL | 27a | YES | YES |
| | 27b | NO | YES |
| | 27c | YES | YES |
| | 27d | NO | YES |

FIG. 20

# FIG. 21

(a) TORQUE COMMAND τc (%)

(b) OPERATION STAGE
STAGE I    STAGE II

(c) GAIN (%) AT GAIN SETTING SECTION 23a

(d) GAIN (%) AT GAIN SETTING SECTION 23b

(e) TORQUE COMMAND τca (%) FROM GAIN SETTING SECTION 23a
INVERTER 11A OPERATES

(f) TORQUE COMMAND τcb (%) FROM GAIN SETTING SECTION 23b
INVERTER 11B OPERATES

(g) TOTAL TORQUE OF AC MOTOR 1 (%)

TIME

ta  tb  tc  td

## FIG. 22

| TORQUE COMMAND $\tau$c (%) | | 0~25 | 25~50 | 50~75 | 75~100 |
|---|---|---|---|---|---|
| OPERATION STAGE | | I | II | III | IV |
| GAIN (%) AT GAIN SETTING SECTION | 23a | 100 | 50 | 33.3 | 33.3 |
| | 23b | 0 | 0 | 0 | 0 |
| | 23c | 0 | 50 | 33.3 | 33.3 |
| | 23d | 0 | 0 | 33.3 | 33.3 |
| PWM CONTROL | 27a | YES | YES | YES | YES |
| | 27b | NO | NO | NO | NO |
| | 27c | NO | YES | YES | YES |
| | 27d | NO | NO | YES | YES |

# FIG. 23

## FIG. 24

| TORQUE COMMAND $\tau c$ (%) | | 0~12.5 | 12.5~25 | 25~37.5 | 37.5~50 | 50~62.5 | 62.5~75 | 75~87.5 | 87.5~100 |
|---|---|---|---|---|---|---|---|---|---|
| OPERATION STAGE | | I | II | III | IV | V | VI | VII | VIII |
| GAIN (%) AT GAIN SETTING SECTION | 23a | 100 | 50 | 33.3 | 25 | 20 | 16.7 | 14.3 | 12.5 |
| | 23b | 0 | 0 | 0 | 25 | 20 | 16.7 | 14.3 | 12.5 |
| | 23c | 0 | 0 | 0 | 0 | 20 | 16.7 | 14.3 | 12.5 |
| | 23d | 0 | 0 | 0 | 0 | 0 | 0 | 0 | 12.5 |
| | 23e | 0 | 50 | 33.3 | 25 | 20 | 16.7 | 14.3 | 12.5 |
| | 23f | 0 | 0 | 33.3 | 25 | 20 | 16.7 | 14.3 | 12.5 |
| | 23g | 0 | 0 | 0 | 0 | 0 | 16.7 | 14.3 | 12.5 |
| | 23h | 0 | 0 | 0 | 0 | 0 | 0 | 14.3 | 12.5 |
| PWM CONTROL | 27a | YES | YES | YES | YES | YES | YES | YES | YES |
| | 27b | NO | NO | NO | YES | YES | YES | YES | YES |
| | 27c | NO | NO | NO | NO | YES | YES | YES | YES |
| | 27d | NO | NO | NO | NO | NO | NO | NO | YES |
| | 27e | NO | YES | YES | YES | YES | YES | YES | YES |
| | 27f | NO | NO | YES | YES | YES | YES | YES | YES |
| | 27g | NO | NO | NO | NO | NO | YES | YES | YES |
| | 27h | NO | NO | NO | NO | NO | NO | YES | YES |

EP 2 355 332 A2

# FIG. 25

11A

11B

11C

11D

1-A

1-B

1-C

1-D

2

1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008043046 A

- JP H081996289587 B